(19) Europäisches Patentamt / European Patent Office / Office européen des brevets

(11) **EP 1 368 747 B1**

(12) **FASCICULE DE BREVET EUROPEEN**

(45) Date de publication et mention de la délivrance du brevet:
**06.11.2019 Bulletin 2019/45**

(21) Numéro de dépôt: **02722347.8**

(22) Date de dépôt: **13.03.2002**

(51) Int Cl.:
*G06F 17/10* (2006.01)  *G06F 7/72* (2006.01)
*H04L 9/30* (2006.01)

(86) Numéro de dépôt international:
**PCT/FR2002/000897**

(87) Numéro de publication internationale:
**WO 2002/073450 (19.09.2002 Gazette 2002/38)**

(54) **PROCEDE ET DISPOSITIF POUR REDUIRE LE TEMPS DE CALCUL D'UN PRODUIT, D'UNE MULTIPLICATION ET D'UNE EXPONENTIATION MODULAIRE SELON LA METHODE DE MONTGOMERY**

VERFAHREN UND VORRICHTUNG ZUR VERKÜRZUNG DER RECHENZEIT EINES PRODUKTES, EINER MULTIPLIKATION UND EINER POTENZIERUNG NACH DER MONTGOMERY-METHODE

METHOD AND DEVICE FOR REDUCING THE TIME REQUIRED TO PERFORM A PRODUCT, MULTIPLICATION AND MODULAR EXPONENTIATION CALCULATION USING THE MONTGOMERY METHOD

(84) Etats contractants désignés:
**DE FR GB IT**

(30) Priorité: **14.03.2001 FR 0103480**

(43) Date de publication de la demande:
**10.12.2003 Bulletin 2003/50**

(73) Titulaire: **Bull SAS**
**78340 Les Clayes-sous-Bois (FR)**

(72) Inventeur: **LE QUERE, Patrick**
**F-91140 VILLEBON SUR YVETTE (FR)**

(74) Mandataire: **Bonnet, Michel et al**
**Cabinet Bonnet**
**93, rue Réaumur - Boîte 10**
**75002 Paris (FR)**

(56) Documents cités:
**US-B1- 6 185 596**

• KOC C K ET AL: "MULTI-OPERAND MODULO ADDITION USING CARRY SAVE ADDERS" ELECTRONICS LETTERS, IEE STEVENAGE, GB, vol. 26, no. 6, 15 mars 1990 (1990-03-15), pages 361-363, XP000122754 ISSN: 0013-5194

• KOC C K ET AL: "CARRY-SAVE ADDERS FOR COMPUTING THE PRODUCT AB MODULO N" ELECTRONICS LETTERS, IEE STEVENAGE, GB, vol. 26, no. 13, 21 juin 1990 (1990-06-21), pages 899-900, XP000107954 ISSN: 0013-5194

• PLOOG H ET AL: "FPGA based architecture evaluation of cryptographic coprocessors for smartcards" FPGAS FOR CUSTOM COMPUTING MACHINES, 1998. PROCEEDINGS. IEEE SYMPOSIUM ON NAPA VALLEY, CA, USA 15-17 APRIL 1998, LOS ALAMITOS, CA, USA,IEEE COMPUT. SOC, US, 15 avril 1998 (1998-04-15), pages 292-293, XP010298224 ISBN: 0-8186-8900-5

• SHAND M ET AL: "Fast implementations of RSA cryptography" COMPUTER ARITHMETIC, 1993. PROCEEDINGS., 11TH SYMPOSIUM ON WINDSOR, ONT., CANADA 29 JUNE-2 JULY 1993, LOS ALAMITOS, CA, USA,IEEE COMPUT. SOC, 29 juin 1993 (1993-06-29), pages 252-259, XP010128541 ISBN: 0-8186-3862-1

• KOC C K: "Montgomery reduction with even modulus" IEE PROCEEDINGS: COMPUTERS AND DIGITAL TECHNIQUES, IEE, GB, vol. 141, no. 5, pages 314-16, XP006001607 ISSN: 1350-2387

- GUINIER D: "MULTIPLICATION OF LARGE INTEGERS BY THE USE OF MODULAR ARITHMETIC APPLICATION TO CRYPTOGRAPHY" SIG SECURITY, AUDIT AND CONTROL REVIEW, THE ASSOCIATION, NEW YORK, NY,, US, vol. 7, no. 4, 1990, pages 7-20, XP000925424 ISSN: 0277-920X
- SCHINDLER W: "A TIMING ATTACK AGAINST RSA WITH THE CHINESE REMAINDER THEOREM" CRYPTOGRAPHIC HARDWARE AND EMBEDDED SYSTEMS. 2ND INTERNATIONAL WORKSHOP, CHES 2000, WORCHESTER, MA, AUG. 17 - 18, 2000 PROCEEDINGS, LECTURE NOTES IN COMPUTER SCIENCE, BERLIN: SPRINGER, DE, vol. 1965, 17 août 2000 (2000-08-17), pages 109-124, XP001049131 ISBN: 3-540-41455-X
- KOC C K ET AL: "Fast software exponentiation in GF(2)" PROCEEDINGS 13TH IEEE SYMPOSIUM ON COMPUTER ARITHMETIC. ASILOMAR, CA, JULY 6 - 9, 1997, IEEE SYMPOSIUM ON COMPUTER ARITHMETIC, LOS ALAMITOS, CA: IEEE COMP. SOC. PRESS, US, 6 juillet 1997 (1997-07-06), pages 225-231, XP010241213 ISBN: 0-8186-7846-1

## Description

L'invention concerne des procédés et des dispositifs pour accélérer le temps d'exécution sur des moyens de calcul d'opérations d'arithmétique modulaire et plus particulièrement d'une exponentiation modulaire, d'une multiplication modulaire et d'un produit de Montgomery.

Une opération de multiplication modulaire consiste à réaliser l'opération suivante :

$$a.\ b \bmod n\ ;$$

où a, b et n sont des entiers, n étant appelé le modulus.

De façon classique, pour effectuer une multiplication modulaire, les moyens de calcul exécutent d'abord une multiplication de a par b, suivie d'une réduction modulo n. Le temps d'exécution de cette opération est proportionnel à $k^2$, où k est le nombre de bits nécessaires pour coder respectivement a, b et n en binaire.

De façon également connue des mathématiciens, une multiplication modulaire peut être réalisée par la méthode de Montgomery. Cette méthode fait intervenir des produits de Montgomery comme décrit dans le document de Cetin Kaya Koç, « High Speed RSA Implementation » qui peut être obtenu à l'adresse suivante :

RSA Laboratories
RSA Data Security, Inc.
100, Marine Parkway, Suite 500
Redwood City, CA 94065 - 1031
U.S.A.

Dans la suite de la description, ce document sera noté D1.

Une opération d'exponentiation modulaire consiste à réaliser l'opération suivante :

$$x^c \bmod n\ ;$$

Où x, c et n sont des entiers, n étant le modulus.

Le calcul de cette exponentiation par des méthodes connues, telles que par exemple la méthode « Square and multiply », fait intervenir k multiplications modulaires, k étant le nombre de bits nécessaires pour coder respectivement x, c et n en binaire. Ainsi il est admis que le temps d'exécution de cette opération est proportionnel à $k^3$.

Les opérations d'exponentiation modulaire constituent les opérations de base de dispositifs de cryptage/décryptage d'informations. Par exemple les dispositifs de cryptage/décryptage mettant en œuvre l'algorithme RSA (Rivest-Shamir-Adleman) utilisent des exponentiations modulaires.

Ces dispositifs se présentent actuellement sous des formes diverses telles que des composants électroniques ou des cartes électroniques destinés à être associés à des moyens de calcul pour exécuter et/ou accélérer les opérations de cryptage/décryptage.

Le commerce électronique, notamment sur Internet, utilise un grand nombre de ces dispositifs de cryptage/décryptage pour crypter et décrypter des opérations commerciales telles que des paiements. Le chiffre d'affaire des sociétés effectuant du commerce électronique est donc limité par le nombre d'opérations de cryptage et de décryptage qui peuvent être effectuées par seconde.

On conçoit dès lors qu'il est important d'accélérer le temps d'exécution d'un produit de Montgomery, d'une multiplication et d'une exponentiation modulaires sur une machine équipée de moyens de calcul.

US-B1-6 185 596 décrit un système de calcul d'un produit de Montgomery à radix élevé comportant un additionneur de Carry-Save.

L'article de KOC C K et al. « Multi-operand modulo addition using Carry Save adders » ELECTRONICS LETTERS, IEE STEVENAGE, GB, vol. 26, no. 6, 15 mars 1990, décrit un procédé pour réaliser une addition modulaire multi-operandes.

L'article de KOC C K « Montgomery réduction with even modulus » IEE PROCEEDINGS : COMPUTERS AND DIGITAL TECHNIQUES, IEE, GB, vol. 141, no.5, pages 314 à 316 décrit un procédé d'exponentation modulaire.

L'invention vise donc à proposer un procédé et un dispositif pour accélérer le temps d'exécution du calcul d'un produit de Montgomery, d'une multiplication et d'une exponentiation modulaires sur une machine équipée de moyens de calcul. L'invention sera réalisée selon les reevendications indépendantes annexées.

L'invention sera mieux comprise à la lecture de la description qui va suivre, donnée uniquement à titre d'exemple et faite en se référant aux dessins annexés, sur lesquels :

la figure 1 représente le procédé de Montgomery pour effectuer une multiplication modulaire ;
la figure 2 représente une méthode pour calculer un produit de Montgomery sous sa forme à radix élevé ;
la figure 3A est un schéma électronique d'un additionneur de Carry-Save;
la figure 3B est un schéma électronique d'un additionneur conventionnel ;
la figure 4 est un exemple de division d'un nombre représenté sous la forme d'un couple Carry-Save ;
la figure 5 représente un procédé pour calculer un produit de Montgomery conforme à l'invention ;
la figure 6 représente un procédé d'exponentiation modulaire selon la méthode m-ary ;
la figure 7 représente un procédé d'exponentiation modulaire conforme à l'invention ;
la figure 8 représente la méthode des restes chinois ;
la figure 9 est une vue schématique d'un multiplieur de Montgomery conforme à l'invention ; et
la figure 10 est une vue schématique d'un exponentiateur modulaire conforme à l'invention .

Dans la suite de la description on utilise les notations suivantes :

- on note D2 le document suivant :Cetin Kaya Koç, « RSA Hardware Implementation »,qui peut être obtenu à la même adresse que le document D1 précédemment cité ;
- := est le symbole d'affectation, ainsi X :=M signifie qu'on affecte la valeur d'une variable notée M à une variable notée X ;
« déc. » indique que le chiffre qui le précède est en notation décimale.
« Composant FPGA » fait référence au composant programmable connu du type FPGA (Field Programmable Gate Array).

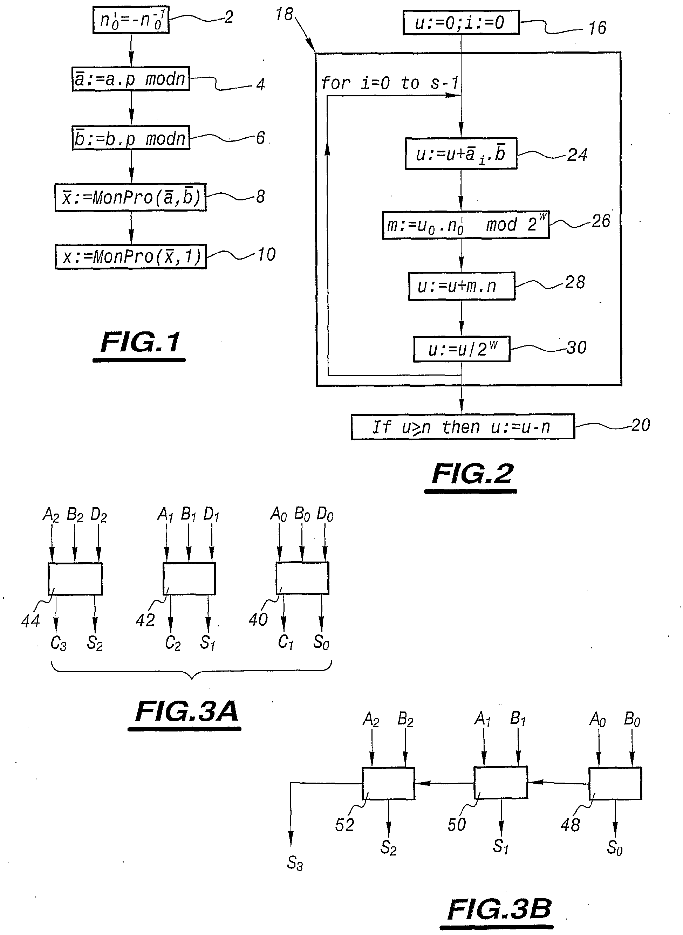

La figure 1 représente le procédé de Montgomery pour effectuer une multiplication modulaire entre une première variable d'entrée notée «a » et une seconde variable d'entrée notée « b » selon la relation suivante :

$$a.\ b \bmod n;$$

où a, b et n sont des entiers naturels, n étant le modulus.

La description qui va suivre de ce procédé ne présente que les informations nécessaires à la compréhension de l'invention. Pour plus d'informations le lecteur peut se référer, par exemple, au document D1 chapitre 3.8 « Montgomery's method ».

La multiplication modulaire selon le procédé de Montgomery s'effectue en cinq étapes successives numérotées 2, 4, 6, 8 et 10 sur la figure 1.

L'étape 2 consiste à calculer la variable $n'_0$ selon la relation suivante :

$$n'_0 = -\ n_0^{-1}\ ;$$

où :

- le signe - représente l'opération de complément à 1 ;
- $n_0$ représente les $\omega$ bits de poids faible du modulus n, $\omega$ étant appelé le radix ;
- $n_0^{-1}$ représente l'inverse de $n_0$ et est défini par la relation $n_0.n_0^{-1} = 1 \bmod (2^\omega)$, cette équation étant résolue par des méthodes connues telle que l'algorithme d'Euclide étendu

L'intérêt du calcul de $n'_0$ dans cette étape apparaîtra à la lecture de la description de la figure 2.

Dans la deuxième étape 4 le résidu de Montgomery de la variable d'entrée a, noté $\bar{a}$ , est calculé selon la relation suivante :

$$\bar{a} := a.p \bmod n$$

où :

- a est la première variable d'entrée du produit modulaire ;
- n est le modulus du produit modulaire,
- p est défini par la relation suivante : $p = 2^k$, où k est l'entier naturel tel que : $2^{k-1} \le n < 2^k$.

Dans la troisième étape 6 le résidu de Montgomery de la variable d'entrée b, noté $\bar{b}$, est calculé selon la relation suivante :

$$\bar{b} := b.p \bmod n\,;$$

où :

- b est la seconde variable d'entrée du produit modulaire ;
- n est le modulus ;
- p est identique à la variable p définie dans la deuxième étape 4.

Dans la quatrième étape 8 le produit de Montgomery entre le résidu $\bar{a}$ et le résidu $\bar{b}$ est calculé et le résultat est affecté à une variable $\bar{x}$ selon la relation suivante :

$$\bar{x} := \text{MonPro}(\bar{a},\bar{b})\,;$$

où :

- $\bar{a}$ et $\bar{b}$ sont les résidus calculés respectivement aux étapes 4 et 6 ;
- MonPro représente l'opération produit de Montgomery entre les variables $\bar{a}$ et $\bar{b}$. Cette opération sera décrite par la suite en regard de la figure 2.

Dans la cinquième étape 10 le produit de Montgomery entre la variable $\bar{x}$ et l'unité est calculé et le résultat est affecté à une variable x selon la relation suivante :

$$x := \text{MonPro}(\bar{x},1)\,;$$

où :

- $\bar{x}$ est la variable calculée à la quatrième étape 8 ;
- 1 représente l'unité ;
- MonPro représente l'opération produit de Montgomery.

A l'issue de ces cinq étapes 2, 4, 6, 8 et 10 le résultat de la multiplication de la première variable a par la seconde variable b modulo n est obtenu dans la variable x.

La figure 2 représente la méthode de Montgomery sous sa forme à radix élevé pour calculer un produit de Montgomery, également appelée ici la méthode de Montgomery à radix élevé.

La description qui va suivre de cette méthode ne présente que les informations nécessaires à la compréhension de l'invention. Pour plus d'informations le lecteur peut se référer, par exemple, au document D2 chapitre 7.5 « High radix Montogmery's method ».

Le calcul d'un produit de Montgomery correspond aux opérations MonPro de la figure 1. Cette opération va être présentée dans le cas particulier de l'étape 8 de la figure 1, c'est-à-dire qu'on décrit ici le calcul suivant :

$$\text{MonPro}(\bar{a},\bar{b}) = \bar{a}.\bar{b}.\,p^{-1} \bmod n\,;$$

Où :

- $\bar{a}$ et $\bar{b}$ sont les résidus de Montgomery respectifs des variables a et b calculées aux étapes 4 et 6 de la figure 1;
- $p^{-1}$ est l'inverse modulo-n de la variable p définie lors de la description de l'étape 4 de sorte que $p^{-1}$ satisfait la relation suivante : $p.p^{-1} = 1 \bmod n$.

Ce procédé comporte trois étapes principales 16, 18 et 20. La première étape 16 consiste à initialiser une variable u et un indice i selon les relations suivantes : $u := 0$ ; $i := 0$. Elle consiste également à pré-calculer des premiers produits $\overline{ai}.\bar{b}$ qui seront définis en regard de l'opération 24 de ce procédé.

La deuxième étape 18 consiste réitérer une boucle d'opérations tant que l'indice i n'est pas inférieur ou égal à une variable s-1, l'indice i étant incrémenté à l'issue de chaque itération de la boucle. Cette boucle d'opérations est notée de façon conventionnelle « for i=0 to s-1 ». La variable s qui détermine le nombre d'itérations est ici définie par la relation suivante :

$$k = s\omega \; ;$$

où :

- k représente le nombre de bits nécessaires pour coder le modulus n, c'est-à-dire que k satisfait la relation : $2^{k-1} \le n < 2^k$ ;
- $\omega$ est le radix .

Ainsi, si par exemple k = 512 bits et si le radix $\omega$ = 4 bits, s = 128.

Par ailleurs si la division de k par le radix $\omega$ ne donne pas un entier naturel, il est possible de rajouter à la représentation binaire du modulus n des bits de poids fort égaux à 0 de manière à ce que la représentation binaire du modulus n ainsi obtenue contienne un nombre de bits k' qui soit un multiple du radix $\omega$.

La boucle d'opérations 18 comporte quatre opérations 24, 26, 28 et 30 successives.

La première opération 24 de la boucle d'opérations 18 consiste à effectuer une première opération d'addition et à affecter le résultat à la variable u selon la relation suivante :

$$u := u + \overline{a_i} . \overline{b} \; ;$$

où :

- $\overline{a_i}$ représente les $\omega$ bits de poids faible de la variable $\overline{a}$ après un *$i^{ème}$* décalage à droite de $\omega$ bits de la représentation binaire de a, i correspondant à l'indice i de la variable $\overline{a_i}$ ;
- $\overline{b}$ représente le résidu de Montgomery de la variable d'entrée b ;
- u est la variable initialisée lors de l'étape 16.

On appellera par la suite « les premiers produits » l'ensemble des valeurs des produits $\overline{a_i}.\overline{b}$ lorsque la valeur de l'indice i varie de 0 à s-1.

L'opération 26 suivante consiste à affecter à une variable m le résultat de la multiplication d'une variable $u_0$ par $n'_0$ modulo $2^\omega$ selon la relation suivante :

$$m := u_0 . n'_0 \bmod 2^\omega;$$

où :

- $u_0$ représente les $\omega$ bits de poids faible de la variable u précédemment calculée lors de l'opération 24;
- $n'_0$ est la variable calculée lors de l'étape 2 du procédé de la figure 1 ;
- $\omega$ est le radix .

L'opération 28 consiste à effectuer une seconde opération d'addition puis à affecter le résultat dans la variable u selon la relation suivante :

$$u := u + m.n$$

où :

- u est la variable précédemment définie;
- m est la variable calculée lors de l'opération 26 ;
- n est le modulus de la multiplication modulaire de la figure 1.

On appellera par la suite « les seconds produits » l'ensemble des valeurs des produits m.n possibles lorsque la valeur de m varie de 0 à $2^\omega$ - 1.

L'opération 30 consiste à effectuer une opération de division de la variable u par une puissance de 2 puis à affecter le résultat de la division à la variable u selon la relation suivante :

$$u := u / 2^\omega$$

où :

- u est la variable précédemment calculée ;
- $2^\omega$ est la puissance de 2, $\omega$ étant le radix.

A l'issue de la boucle d'opérations 18, l'étape 20 est exécutée. Cette étape consiste à effectuer une opération de réduction si la valeur de la variable u obtenue à l'issue de la boucle d'opérations 18 est supérieure à n, n étant le modulus. L'opération de réduction consiste à affecter à la variable u le résultat de la soustraction u moins n selon la relation suivante :

$$u := u - n$$

où u et n sont respectivement la variable calculée lors de la boucle d'opérations 18 et le modulus de la multiplication modulaire de la figure 1.

On notera que le procédé de Montgomery décrit aux figures 1 et 2 transforme des multiplications modulo n, en des multiplications modulo $2^\omega$. Or les multiplications modulo $2^\omega$ s'exécutent beaucoup plus rapidement sur des moyens de calcul conventionnels. Toutefois, il est connu que ce gain de rapidité au niveau des multiplications modulaires est contrebalancé par la lenteur du calcul des résidus $\overline{a}$ et $\overline{b}$ lors des étapes 4 et 6 de la figure 1.

La méthode de Montgomery à radix élevée est couramment utilisée avec une valeur du radix égale à 8, cette valeur correspondant à un octet (mot de 8 bits). De façon surprenante il a été déterminé par des tests que cette valeur du radix n'était pas l'optimum pour accélérer le temps d'exécution du calcul d'un produit de Montgomery à radix élevé dans les conditions suivantes :

- le calcul est effectué sur des grands nombres. Par grands nombres on désigne des entiers naturels codés en binaire sur au moins 320 bits.
- le calcul est effectué par des moyens matériels de calcul. Par moyens matériels de calcul on désigne ici des composants électroniques, ou des ensembles de composants électroniques spécialement conçus pour réaliser ce calcul. On exclue effectivement de ces moyens matériels spécifiques, des moyens polyvalents de calcul, tel qu'un ordinateur classique associé à un programme permettant de réaliser ce calcul.

Les tests suivants ont été réalisés pour des variables a, b et n codées en binaire sur 512 bits, c'est-à-dire pour une valeur de la variable k, précédemment définie, égale à 512 bits. Les tests consistent dans une première étape à concevoir des moyens matériels de calcul d'un produit de Montgomery selon le procédé de la figure 2. Dans une seconde étape les tests consistent à déterminer le temps d'exécution du calcul d'un produit de Montgomery selon le procédé de la figure 2 sur les moyens matériels de calcul conçus lors de la première étape et pour la fréquence de fonctionnement maximale de ces moyens matériels. On notera ainsi dans les exemples numériques suivants que la fréquence maximale de fonctionnement des moyens matériels de calcul diminue au fur et à mesure que la valeur du radix $\omega$ augmente. Pour les résultats numériques suivants les moyens matériels de calcul sont formés avec un composant FPGA (Field Programmable Gate Array) dont la référence est <u>10K200E-1</u>. Dans ces conditions les résultats obtenus sont les suivants :

- Pour un radix $\omega$ égal à 2 bits, la fréquence de fonctionnement maximale des moyens matériels de calcul est de 66 MHz. Le temps d'exécution d'un produit de Montgomery selon le procédé de la figure 2 est de 8280 nano-secondes.
- Pour un radix $\omega$ égal à 3 bits, la fréquence de fonctionnement maximale des moyens matériels de calcul est de 60 MHz. Le temps d'exécution d'un produit de Montgomery selon le procédé de la figure 2 est de 6447 nano-secondes.
- Pour un radix $\omega$ égal à 4 bits, la fréquence de fonctionnement maximale des moyens matériels de calcul est de 50 MHz. Le temps d'exécution d'un produit de Montgomery selon le procédé de la figure 2 est de 5940 nano-secondes.
- Pour un radix $\omega$ égal à 5 bits, la fréquence de fonctionnement maximale des moyens matériels de calcul est de 40 MHz. Le temps d'exécution d'un produit de Montgomery selon le procédé de la figure 2 est de 6475 nano-secondes.

On conçoit donc à la lecture des résultats de ces tests que pour optimiser le temps d'exécution d'un produit de Montgomery selon le procédé de la figure 2 pour des grands nombres codés sur 512 bits le radix doit être choisi égal à 4 bits.

De façon similaire il a été déterminé qu'une valeur du radix égale à 4 bits permet également d'optimiser le temps d'exécution du calcul d'un produit de Montgomery selon le procédé de la figure 2 pour des grands nombres codés sur 1024 bits.

Il existe une autre méthode pour calculer des produits de Montgomery connue sous le nom de «Méthode de Montgomery sous sa forme simple ». Cette méthode correspond à la méthode de Montgomery à radix élevé dans le cas où le radix est égal à 1 bit. Par conséquent on ne décrira pas ici cette méthode plus en détail, on considéra simplement que le la méthode de Montgomery à radix élevé inclus également le cas où le radix est égal à 1 bit.

Les figures 3A et 3B représentent un schéma électronique d'un additionneur de Carry-Save et un schéma électronique d'un additionneur conventionnel.

Sur ces schémas on note $A_i$, $B_i$, $D_i$, $C_i$ et $S_i$ respectivement les $i^{\text{ème}}$ bits en partant de la droite de la représentation binaire de variables A, B, D, C, et S, le bit le plus à droite de chaque représentation binaire ayant un indice i égal à zéro.

L'additionneur de Carry-Save de la figure 3A comporte trois cellules 40, 42 et 44. Ces cellules 40, 42 et 44 sont respectivement raccordées en entrée à des premiers moyens de stockage (non représentés) des bits $A_0$, $B_0$ et $D_0$, des bits $A_1$, $B_1$ et $D_1$ et des bits $A_2$, $B_2$ et $D_2$ des variables d'entrée A, B et D. Elles sont également raccordées en sortie respectivement à des seconds moyens de stockage (non représentés) des bits $C_1$ et $S_0$, $C_2$ et $S_1$, et $C_3$ et $S_2$ des variables de sortie C et S.

La cellule 40 est adaptée pour calculer la valeur du bit $S_0$ selon la relation suivante :

$$S_0 := A_0 \oplus B_0 \oplus D_0$$

où :

- $A_0$, $B_0$ et $D_0$ sont les bits d'entrée de la cellule;
- $\oplus$ représente l'opération logique « ou exclusif » ;

La cellule 40 est également adaptée pour calculer la valeur du bit $C_1$ selon la relation suivante :

$$C_1 := A_0 . B_0 + A_0 . D_0 + B_0 . D_0$$

où :

- $A_0$, $B_0$ et $D_0$ ont été définis ci-dessus;
- + représente l'opération logique « ou » ;
- . représente l'opération logique « et ».

De façon similaire à la cellule 40, la cellule 42 est adaptée pour calculer les bits de sortie $C_2$ et $S_1$ selon les deux relations suivantes ;

$$S_1 := A_1 \oplus B_1 \oplus D_1 \;;$$

$$C_2 := A_1 . B_1 + A_1 . D_1 + B_1 . D_1 \;;$$

De façon similaire aux cellules 40 et 42, la cellule 44 est adaptée pour calculer les bits de sortie $S_2$ et $C_3$ selon les deux relations suivantes :

$$S_2 := A_2 \oplus B_2 \oplus D_2 \;;$$

$$C_3 := A_2 . B_2 + A_2 . D_2 + B_2 . D_2 \;;$$

L'opération qui consiste à calculer les bits de sortie des variables S et C en fonction des bits d'entrée selon les relations précédentes s'appelle une addition de Carry-Save.

On remarquera qu'en sortie de l'additionneur de Carry-Save, le résultat de l'addition des trois variables d'entrée A, B et D est enregistré dans les deux variables de sortie C et S, C et S formant ce que l'on appelle un couple de Carry-Save, noté (C, S). Pour obtenir le résultat de l'addition des trois variables d'entrée A, B et D dans une seule variable U, les variables C et S doivent être recombinées selon la relation suivante :

$$U := C + S$$

Où:

- C et S sont les variables du couple du Carry-Save obtenues en sortie de l'additionneur de Carry-Save ;
- + représente l'opération d'addition conventionnelle.

La méthode consistant à additionner les bits des variables d'entrée selon les relations précédentes pour obtenir un couple de Carry-Save, puis à recombiner les variables du couple de Carry-Save pour obtenir le résultat final de l'addition des variables d'entrée est connue sous le nom de « la méthode de Carry-save ». Ainsi la méthode de Carry-Save se compose d'une opération d'addition de Carry-Save suivie d'une opération de recombinaison du couple de Carry-Save.

On note $\lambda$ le temps d'exécution du calcul de $C_1$ et $S_0$ par la cellule 40. On suppose que le temps d'exécution du calcul de $C_2$ et $S_1$ et de $C_3$ et $S_2$ par leurs cellules respectives 42 et 44 est également égal à $\lambda$. Dans ces conditions, le temps d'exécution de l'addition de Carry-Save entre les trois variables d'entrée A, B et D est égal à $\lambda$. En effet les bits des représentations binaires des variables A, B et D sont traités en parallèle par les cellules 40, 42 et 44. Ce résultat peut être généralisé à des additionneurs de Carry-Save comportant de nombreuses cellules, de manière à pouvoir réaliser des additions de Carry-Save sur des grands nombres comme définit précédemment.

On notera qu'un additionneur de Carry-Save peut également être réalisé par des moyens logiciels tels qu'un programme permettant de mettre en oeuvre des traitements en parallèle des opérations d'addition de Carry-Save.

La figure 3B représente un additionneur conventionnel adapté pour réaliser l'addition conventionnelle de deux variables d'entrée A et B et pour stocker le résultat dans une variable de sortie S.

Cet additionneur conventionnel comporte trois cellules 48, 50, 52.

La cellule 48 est raccordée à la sortie de premiers moyens de stockage (non représentés) des bits $A_0$ et $B_0$ et à l'entrée de seconds moyens de stockage (non représentés) du bit $S_0$. Elle est également raccordée à une entrée de la cellule 50. Cette cellule 48 est adaptée pour additionner de façon conventionnelle les bits $A_0$ et $B_0$ et pour transmettre la retenue de cette addition à la cellule 50. Le résultat de cette addition est stocké dans les seconds moyens de stockage du bit $S_0$.

La cellule 50 est raccordée à la sortie de premier moyens de stockage (non représentés) des bits $A_1$ et $B_1$ et à l'entrée de seconds moyens de stockage (non représentés) du bit $S_1$. Elle est également raccordée à une entrée de la cellule 52. Cette cellule 50 est adaptée pour additionner les bits $A_1$ et $B_1$ et pour transmettre la retenue de cette addition à la cellule 52. Le résultat de cette addition est stocké dans les seconds moyens de stockage du bit $S_1$.

La cellule 52 est raccordée à la sortie de premiers moyens de stockage (non représentés) des bits $A_2$ et $B_2$ et à l'entrée de second moyens de stockage (non représentés) des bits $S_2$ et $S_3$. Cette cellule 52 est adaptée pour additionner les bits $A_2$ et $B_2$, le résultat et la retenue de cette addition étant stockés dans les seconds moyens de stockage, respectivement dans les bits $S_2$ et $S_3$.

On note $\lambda$ le temps d'exécution du calcul de $S_0$ par la cellule 48 et l'on suppose que le temps d'exécution du calcul de $S_1$ et de $S_2$, $S_3$ respectivement par les cellules 50 et 52 est identique à celui de la cellule 48. On remarque à la lecture de la description de cet additionneur conventionnel que l'exécution du calcul de $S_1$ par la cellule 50 ne peut commencer que lorsque la cellule 48 a transmis la retenue de l'addition des bits $A_0$ et $B_0$, c'est-à-dire lorsque le calcul de $S_0$ est terminé. De même l'exécution du calcul de $S_2$, $S_3$ par la cellule 52 ne peut commencer que lorsque la cellule 50 a fini le calcul de $S_1$. Par conséquent l'addition des deux variables d'entrée A, B par l'additionneur de la figure 3B, nécessite un temps d'exécution de $3\lambda$.

On conçoit dès lors que pour additionner trois variables d'entrée A, B et D à l'aide de l'additionneur conventionnel de la figure 3B, le temps d'exécution du calcul est de $3\lambda$ pour une première addition de A à B auquel il convient de rajouter $3\lambda$, correspondant au temps d'exécution d'une seconde addition entre le résultat de la première addition et la variable D. Ainsi la réalisation d'une addition entre trois variables d'entrée A, B et D à l'aide de cet additionneur conventionnel nécessitent un temps de $6\lambda$.

On vérifie bien à l'aide de cet exemple simplifié que le temps d'exécution d'une addition conventionnelle est proportionnel aux nombres de bits des variables d'entrée.

A titre de comparaison on suppose que le temps d'exécution $\lambda$ est le même pour les cellules 40, 42, 44, 48, 50 et 52 des figures 3A et 3B. Ainsi, une addition de Carry-Save entre les variables A, B et D à l'aide de l'additionneur de Carry-Save s'exécute en un temps de $\lambda$. Pour obtenir le résultat de l'addition dans une seule variable, les variables C et S doivent être recombinées en effectuant une opération d'addition conventionnelle entre celles-ci qui s'exécute en un temps de $3\lambda$. Le temps total pour exécuter l'addition des variables A, B et D en mettant un œuvre un additionneur de Carry-Save est alors égal à $4\lambda$, contre $6\lambda$ dans le cas où l'on n'utilise que des additionneurs conventionnels.

On réalise également à la lecture de la description précédente que le gain de temps réalisé grâce à la mise en œuvre d'additionneurs de Carry-Save est d'autant plus important que les additions sont réalisées sur des grands nombres. En effet, le temps d'exécution d'une addition conventionnelle est proportionnel au nombre de bits des variables d'entrée, ce qui n'est pas le cas pour une addition de Carry-Save.

Toutefois il est connu que l'utilisation d'additionneurs de Carry-Save ne présente d'intérêt que pour réaliser des additions entre trois variables d'entrée. De plus le résultat obtenu en sortie d'un additionneur de Carry-Save se présente sous la forme d'un couple de Carry-Save ce qui nécessite de recombiner les variables de sortie C et S par une addition conventionnelle, limitant ainsi l'intérêt d'un additionneur de Carry-Save. Il a également été réalisé qu'il est difficile d'effectuer des opérations arithmétiques sur une variable représentée sous la forme d'un couple de Carry-Save. Par exemple on ne peut pas simplement effectuer une opération de division par une puissance de 2, notée $2^{\omega}$, d'un couple de Carry-Save selon la relation suivante :

$$(C, S)/2^{\omega} := (C/2^{\omega}, S/2^{\omega})$$

où C et S sont les variables du couple de Carry-Save.

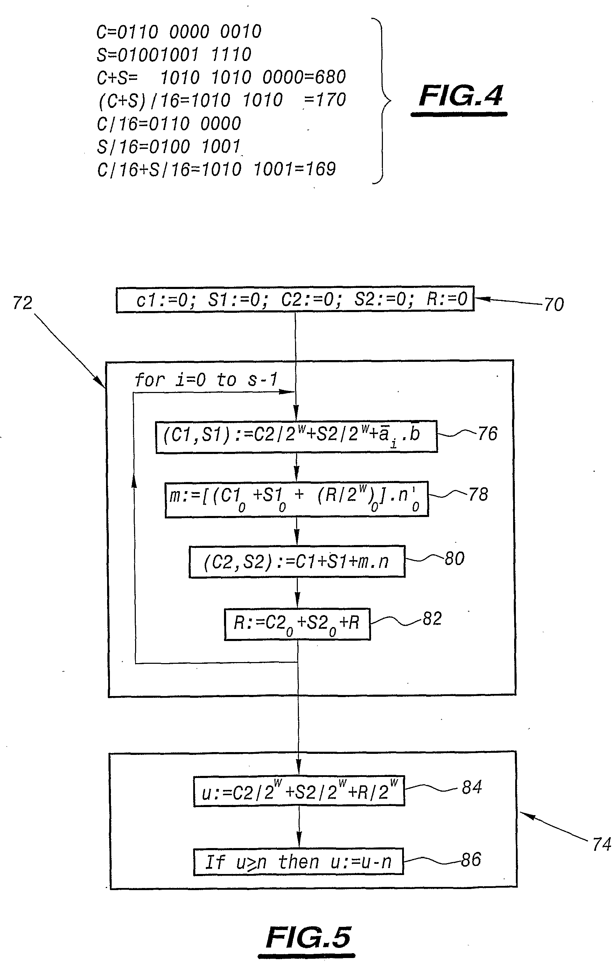

Cette difficulté est illustrée sur l'exemple de la figure 4 où :

$$C = 0110\ 0000\ 0010\ ;$$

et

$$S = 01001001\ 1110.$$

En recombinant les variables C et S selon la relation C+S on obtient le résultat suivant :

$$C+S = 10101010\ 0000\ (= 680\ \text{déc.})$$

En divisant le couple de Carry-Save recombiné C+S par une puissance de deux, ici 16, on obtient alors le résultat suivant :

$$(C+S)/16 = 10101010\ (= 170\ \text{déc.})$$

Maintenant si l'on effectue le même calcul mais en inversant l'ordre des opérations, c'est-à-dire que l'on réalise d'abord l'opération de division et ensuite l'opération de recombinaison, on obtient alors successivement les résultats numériques suivants :

$$C/16 = 0110\ 0000\ ;$$

$$S/16 = 0100\ 1001\ ;$$

$$C/16 + S/16 = 1010\ 1001\ (= 169\ \text{déc.})$$

On remarque donc que la simple division de chaque variable C et S par une puissance de deux ne permet pas d'obtenir le résultat exact. Il est donc nécessaire de recombiner le couple de Carry-Save (C,S) avant d'exécuter une division d'une variable stockée sous la forme d'un couple de Carry-Save. Il n'existe pas dans l'état de la technique actuel de solution connue à ce problème.

A la lecture des inconvénients connus des additionneurs de Carry-Save, on conçoit qu'il n'est pas évident de mettre en œuvre ces additionneurs dans le cadre du calcul d'un produit de Montgomery. En effet les procédés connus de calcul d'un produit de Montgomery ne font intervenir que des opérations d'additions entre deux variables et non pas trois. De plus ces procédés connus comportent, notamment dans la cas de la méthode à radix élevé, des opérations arithmétiques qui ne peuvent pas être réalisées sur des couples de Carry-Save, telles que l'opération 30 de la figure 2.

La figure 5 représente un procédé conforme à l'invention pour calculer un produit de Montgomery entre deux variables d'entrée, notées $\bar{a}$ et $\bar{b}$, correspondant aux résidus calculés lors des étapes 4 et 6 du procédé de la figure 1. On utilise pour présenter ce procédé les mêmes notations que celles définies en regard de la figure 2.

La figure 5 comporte trois étapes principales 70, 72 et 74 successives, l'étape 70 étant une étape d'initialisation, l'étape 72 étant une étape d'itération d'une boucle d'opérations, et l'étape 74 étant une étape de recombinaison et de réduction de résultat.

L'étape 70 d'initialisation consiste à initialiser les variables nécessaires pour le calcul du produit de Montgomery selon les relations suivantes :

$$C1 := 0 ;$$

$$S1 := 0 ;$$

$$C2 := 0 ;$$

$$S2 := 0 ;$$

$$R := 0 ;$$

Où:

- C1 et S1 sont les variables d'un premier couple de Carry-Save noté (C1 , S1) ;
- C2 et S2 sont les variables d'un second couple de Carry-Save noté (C2, S2) ;
- R est une variable de stockage et de cumul de retenue dont l'intérêt apparaîtra à la lecture de la suite de la description.

L'étape 70 consiste également à pré-calculer les premiers produits $\overline{ai}.\bar{b}$ définis en regard de l'opération 24 de la figure 2.

Pour cela on multiplie $\bar{b}$ par toutes les valeurs possibles de $\overline{ai}$, c'est-à-dire les entiers naturels compris entre 0 et $2^\omega - 1$.

La deuxième étape 72 consiste à réitérer une boucle d'opérations tant qu'un indice, noté i, n'est pas supérieur ou égal à une variable s-1, l'indice i étant incrémenté à l'issue de chaque itération de la boucle. Cette boucle d'opérations est notée de façon conventionnelle « for i=0 to s-1 ». La variable s qui détermine le nombre d'itérations est définie de façon analogue à celle de l'étape 18 de la figure 2.

La boucle d'opérations 72 comporte quatre opérations 76, 78, 80 et 82 successives.

L'opération 76 consiste à effectuer une première opération d'addition de Carry-Save entre les variables C2 divisée par $2^\omega$, S2 divisée par $2^\omega$ et un des premiers produits $\overline{a_i}.\bar{b}$ définis en regard de l'opération 24 de la figure 2. Cette opération d'addition est réalisée à l'aide d'un additionneur de Carry-Save selon la relation suivante :

$$(C1, S1) := C2/2^\omega + S2/2^\omega + \overline{a_i}.\bar{b}$$

où :

- $\omega$ est le radix ;
- (C1, S1) est le premier couple de Carry-Save formé par les variables C1 et S1;

- $\overline{a_i}.\overline{b}$ est un des premiers produits;
- C2 et S2 sont les variables du second couple de Carry-Save (C2, S2).

On remarquera que cette opération 76 remplit la même fonction que les opérations 24 et 30 de la figure 2 mais la première opération d'addition est réalisée à l'aide d'un additionneur de Carry-Save.

L'opération 78 consiste à réaliser l'addition conventionnelle des variables $C1_0$, $S1_0$ et $(R/2^\omega)_0$ puis à affecter le résultat de cette opération à une variable m, selon la relation suivante :

$$m := (C1_0 + S1_0 + (R/2^\omega)_0). \, n'_0$$

où :

- $C1_0$ et $S1_0$ représentent les $\omega$ bits de poids faible respectivement des variables C1 et S1, $\omega$ étant le radix.
- $(R/2^\omega)_0$ représente les $\omega$ bits de poids faible du résultat de la division de R par $2^\omega$, $\omega$ étant le radix;
- $n'_0$ est la variable calculée lors de l'étape 2 du procédé de la figure 1;
- m est une variable dans laquelle le résultat est stocké.

L'opération 80 consiste à effectuer une seconde opération d'addition entre les variables C1, S1 et un des seconds produits m.n définis en regard de l'opération 28 de la figure 2. Cette addition est réalisée par un additionneur de Carry-Save et le résultat est affecté aux variables C2, S2 du second couple de Carry-Save selon la relation suivante :

$$(C2, S2) := C1 + S1 + m.n$$

où :

- C1 et S1 sont les variables précédemment calculées ;
- m.n est l'un des seconds produits ;
- S2 et C2 sont les variables du second couple de Carry-Save.

On notera que l'opération 80 remplit la même fonction que la seconde opération d'addition 28 de la figure 2 mais elle est réalisée à l'aide d'un additionneur de Carry-Save.

L'opération 82 consiste à calculer la variable R en additionnant de façon conventionnelle les variables $C2_0$, $S2_0$, et la valeur de la variable R. Le résultat est affecté à la variable R selon la relation suivante :

$$R := C2_0 + S2_0 + R$$

Où:

- $C2_0$, $S2_0$ sont respectivement les $\omega$ bits de poids faible des variables C2 et S2, $\omega$ étant le radix;
- R est la variable de stockage et de cumul de retenues.

En effet, il a été découvert que la différence de résultat entre l'opération $(C2+S2)/2^\omega)$ et l'opération $(C2/2^\omega + S2/2^\omega)$, telle qu'illustrée par l'exemple de la figure 4, est égale à la retenue de l'opération $C2_0 + S2_0$. On appelle donc ici « la retenue qui risque d'être perdue par la division de chaque variable C2 et S2 par une puissance de 2, notée $2^\omega$ », la retenue de l'opération $C2_0 + S2_0$. Cette opération 82 calcule donc la retenue qui risque d'être perdue par la division de chaque variable C2 et S2 du second couple du Carry-Save par la puissance $2^\omega$ lors de l'opération 76. De plus, ici, l'opération 82 cumule la retenue de l'addition de $C2_0 + S2_0$ à chaque itération de la boucle d'opérations 72 pour un usage ultérieur lors de l'étape 74.

L'étape 74 de recombinaison et de réduction se compose d'une opération 84 de recombinaison suivie d'une opération 86 de réduction.

L'opération 84 consiste à réaliser une addition conventionnelle entre la variable C2 divisée par $2^\omega$, la variable S2 divisée par $2^\omega$ et la variable R divisée par $2^\omega$, le résultat étant affecté à une variable u selon la relation suivante :

$$u := C2\,/2^{\omega} + S2\,/2^{\omega} + R\,/2^{\omega}$$

Où:

- $\omega$ est le radix ;
- C2, S2 et R sont les variables précédemment calculées lors de la boucle d'opérations 72;
- u est une variable de stockage du résultat de l'opération.

On notera que cette opération est une combinaison des opérations suivantes :

- Une division par $2^{\omega}$ de chaque variable du couple du Carry-Save (C2, S2).
- Une opération d'extraction du cumul des retenues calculées pendant l'exécution de la boucle d'opérations 72, cette opération étant réalisée en décalant à droite de $\omega$ bits la variable R.
- Une opération de recombinaison du second couple du Carry-Save (C2, S2), calculé pendant l'exécution de la boucle d'opérations 72.
- Une opération d'addition au second couple de Carry-Save précédemment recombiné du cumul des retenues qui auraient été perdues si elles n'avaient pas été stockées et cumulées dans la variable R lors de l'exécution de la boucle d'opérations 72. Cette opération permet ainsi de restituer la véritable valeur du résultat à l'issue de la boucle d'opérations 72 malgré des opérations de division de chaque variable d'un couple de Carry-Save.

L'opération 86 consiste à réaliser une opération de réduction si la variable u est supérieure au modulus n selon la relation suivante :

$$u := u - n$$

où u est le résultat du produit de Montgomery.

Cette opération est notée de façon conventionnelle : « If $u \geq n$ then u:=u-n. »

Le procédé de calcul d'un produit de Montgomery conforme à l'invention est nettement plus rapide que le procédé connu de la figure 2. En effet la première et la seconde opérations d'addition 76 et 80 sont réalisées à l'aide d'additionneurs de Carry-Save alors que dans le procédé connu les première et seconde opérations d'addition 24 et 28 sont réalisées à l'aide d'au moins un additionneur conventionnel. De plus le procédé de la figure 5 dévoile une méthode pour réaliser une division d'une variable représentée sous la forme d'un couple de Carry-Save par une puissance de 2, ce qui évite une étape de recombinaison du couple de Carry-Save avant d'exécuter cette division. Cette accélération du temps d'exécution du produit de Montgomery est d'autant plus sensible que les variables d'entrée $\overline{a}$, $\overline{b}$ et n sont grandes c.a.d. codées sur un nombre de bits importants. (supérieur à 320 bits)

On notera que les opérations 78 et 82 comportent des additions sur des petits nombres codés sur $\omega$ bits et qu'une optimisation du temps d'exécution de ces deux opérations n'a pas d'effet sensible.

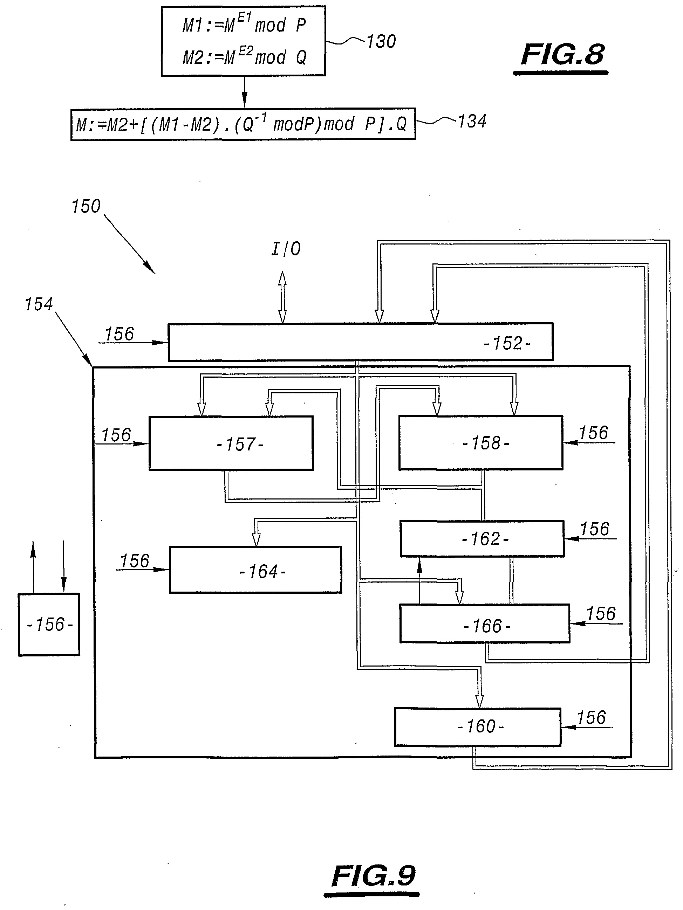

Par ailleurs les opérations 84 et 86 sont exécutées moins fréquemment que les opérations de la boucle 72, par conséquent une optimisation de leur temps d'exécution, bien que possible, n'a pas autant d'effet que celle des opérations de la boucle 72. Toutefois, en variante ces opérations sont accélérées. Un mode de réalisation de cette variante sera présenté en regard de la figure 9.

Dans une autre variante l'ensemble des seconds produits m.n sont calculés avant d'exécuter la boucle d'opérations 72 et stockés dans une mémoire. Ainsi les opérations de calcul des premiers produits $\overline{a_i}.\overline{b}$ et des seconds produits m.n pendant la boucle d'opérations 72 sont remplacées par des opérations de sélection des résultats de ces calculs dans ladite mémoire .

En variante le radix $\omega$ est choisi égal à 4 bits de manière à optimiser le temps d'exécution du produit de Montgomery entre des variables d'entrée codées sur 512 ou 1024 bits sur des moyens matériels de calcul. En effet, il a été déterminé de façon similaire à ce qui a été décrit en regard du procédé de la figure 2 que pour de telles variables d'entrée une valeur du radix $\omega$ égale à 4 bits accélère le temps d'exécution du calcul du produit de Montgomery.

De préférence le mode de réalisation sera une combinaison du procédé de la figure 5 et des deux variantes décrites ci-dessus.

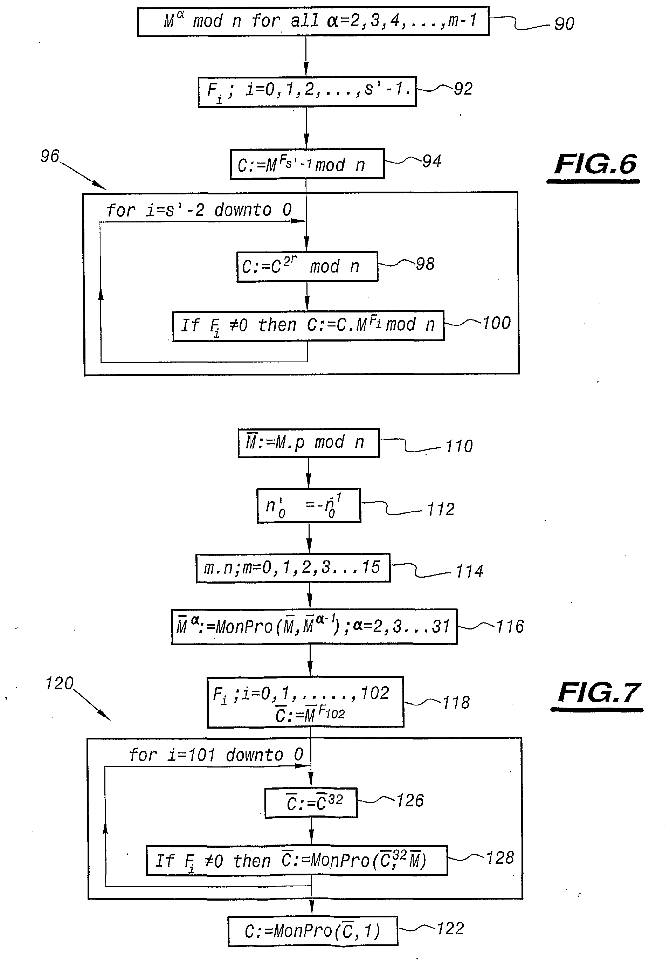

La figure 6 représente un procédé de calcul d'une exponentiation modulaire selon la méthode m-ary, pour effectuer le calcul suivant :

$$M^E \bmod n$$

Où:

- M, E et n sont des entiers naturels codés en binaire sur k bits au maximum,
- M est le message ; E est l'exposant ; et n est le modulus.

La méthode m-ary pour calculer une exponentiation modulaire étant connue, la description qui suit n'a pour but que d'introduire les éléments nécessaires à la compréhension de l'invention. Le lecteur se référa au document D1 chapitre 2.4 « The m-ary Method » pour des informations plus détaillées.

La figure 6 comporte quatre étapes successives 90, 92, 94 et 96.

L'étape 90 consiste à calculer et à enregistrer dans une mémoire les exponentiations de la variable M suivantes :

$$M^{\alpha} \bmod n \; ;$$

Où:

- M est le message ;
- $\alpha$ est un exposant ;
- n est le modulus.

L'exponentiation précédente est calculée pour toutes les valeurs de l'exposant $\alpha$ comprises entre 2 et m-1, m étant égal à $2^r$, où r est un paramètre prédéfini par l'utilisateur. Cette étape est représentée de façon conventionnelle sur la figure 6 par le symbole « $M^{\alpha} \bmod n$ for all $\alpha = 2,4, ....m-1$ ».

L'étape 92 consiste à découper la représentation binaire de l'exposant E en s' mots de r bits, notés chacun $F_i$, où i est un indice du mot et varie de 0 pour le mot le plus à droite de la représentation binaire de E à s'-1 pour le mot le plus à gauche de cette même représentation binaire. s'est calculé selon la relation suivante :

$$k = s' \cdot r$$

Où:

- k est le nombre de bits de la représentation binaire de E;
- r est le paramètre prédéfini.

Si k n'est pas divisible par r, des bits égaux à 0 sont ajoutés à gauche de la représentation binaire de l'exposant E pour obtenir une représentation binaire comportant un nombre de bits divisible par le paramètre r. Par exemple, si r et k sont respectivement égaux à 5 et 512 bits alors 3 bits de valeur nulle sont ajoutés sur la gauche de la représentation binaire de l'exposant E pour obtenir une représentation binaire comportant 515 bits ce qui permet d'obtenir s'égale 103.

On obtient les différents mots $F_i$, par exemple, par des opérations successives de décalage à gauche de l'exposant E de r bits dans un registre à décalage à gauche.

L'étape 94 consiste à calculer $M^{F_{s'-1}} \bmod n$ et à affecter le résultat à une variable C selon la relation suivante :

$$C := M^{F_{s'-1}} \bmod n \; ;$$

Où:

- n est le modulus ;
- $F_{s'-1}$ est le (s'-1) énième mot déterminé lors de l'étape 92 ;
- M est le message ;
- C est la variable dans laquelle est stocké le résultat de l'opération 94.

L'étape 96 consiste à réitérer une boucle d'opérations tant que l'indice i initialisé à la valeur de s'-2 n'est pas inférieur ou égal à 0, l'indice i étant décrémenté à l'issue de chaque itération de la boucle. Cette boucle d'opérations est notée de façon conventionnelle « for i=s'-2 downto 0 ». La variable s' qui détermine le nombre d'itérations a été définie précédemment.

Cette boucle d'opérations comporte deux opérations 98, 100 successives.

L'opération 98 consiste à calculer une exponentiation modulaire de la variable C puis à affecter le résultat dans la variable C selon la relation suivante :

$$C := C^{2^r} \bmod n$$

Où :

- C est la variable initialisée lors de l'étape 94 ;
- r est le paramètre prédéfini;
- n est le modulus.

L'opération 100 consiste à calculer une multiplication modulaire de la variable C, précédemment obtenue lors de l'opération 98, par la variable $M^{F_i}$ si le mot $F_i$ est différent de 0 selon la relation suivante :

$$C := C. M^{F_i} \bmod n$$

Où :

- n est le modulus ;
- $F_i$ est le mot d'indice i déterminé lors de l'étape 92 ;
- C est la variable précédemment calculée lors de l'opération 98.

Cette opération est représentée de façon classique sur la figure 6 par le symbole « If $F_i \neq 0$ Then $C := C. M^{F_i}$ mod n ».

A l'issue de l'exécution de la boucle d'opérations 96, la variable C contient le résultat de l'exponentiation modulaire du message M.

La méthode de m-ary décrite ci-dessus pour calculer une exponentiation modulaire met en œuvre approximativement $\delta$ opérations de multiplication modulaire, $\delta$ étant calculé par la relation suivante :

$$\delta = 2^r - 2 + k - r + (k/r - 1)(1 - 1/2^r)$$

Où :

- k est le nombre de bits de l'exposant E ;
- r est le paramètre prédéfini.

Ceci représente une réduction du nombre d'opérations par rapport à d'autres procédés connus tels que l'algorithme binaire LR, de 17 à 18 % lorsque l'exponentiation porte sur des grands nombres codés sur 512 ou 1024 bits. Toutefois certaines méthodes sont connues pour être encore plus rapides, telles que par exemple l'algorithme binaire RL qui permet un parallélisme des opérations. Cependant il a été déterminé de façon expérimentale que la méthode m-ary pour un paramètre r choisi égal à 5 bits est un compromis optimal entre le nombre d'opérations de multiplication modulaire effectuées et les ressources nécessaires pour mettre en œuvre cette méthode. Par ressources on désigne par exemple le nombre de cellules d'un composant FPGA.

La figure 7 illustre un procédé de calcul d'une exponentiation modulaire conforme à l'invention illustré dans le cas du calcul de l'exponentiation suivante :

$$M^E \bmod n$$

Où :

- M, E et n sont des entiers naturels codés en binaire sur 512 bits au maximum ;

- M est le message :
- E est l'exposant ; et
- n est le modulus

Le procédé d' exponentiation modulaire conforme à l'invention met en œuvre la méthode m-ary dans laquelle les multiplications modulaires sont réalisées selon le procédé de Montgomery décrit en regard de la figure 1. Les produits de Montgomery mis en œuvre par le procédé de Montgomery sont, par exemple, calculés selon le procédé de la figure 5 avec un radix égal à 4 bits. De plus dans le cas particulier décrit ici le paramètre r de la méthode de m-ary est choisi égal à 5 bits de manière à accélérer le temps d'exécution du calcul de l'exponentiation pour des variables d'entrée codées sur 512 ou 1024 bits.

Ce procédé comporte sept étapes 110, 112, 114, 116, 118, 120 et 122 successives.

L'étape 110 consiste à calculer le résidu de Montgomery du message M selon la relation suivante :

$$\overline{M} := M.p \bmod n$$

où :

- M est le message;
- p est le paramètre de la méthode de Montgomery défini lors de l'étape 4 du procédé de la figure 1 selon la relation suivante : $p = 2^k$, où k est le nombre de bits du modulus n ;
- n est le modulus ;
- $\overline{M}$ est la variable dans lequel est enregistré le résidu du message M.

Le calcul du résidu de M s'effectue par des méthodes classiques telles que l'algorithme d'Euclide étendu.

L'étape 112 consiste à calculer la variable $n'_0$ selon la relation suivante $n'_0 = - n_0^{-1}$. Ce calcul ayant déjà été décrit en regard de l'étape 2 de la figure 1 il ne sera pas décrit ici plus en détail. Ce calcul s'effectue également par des méthodes classiques telles que l'algorithme d'Euclide étendu.

L'étape 114 consiste à calculer l'ensemble des seconds produits m.n. Pour cela le produit m.n est calculé pour chaque valeur de m comprise entre 0 et 15. En effet, l'examen de l'opération 26 de la figure 2 montre que m est congru à $u_0$. $n'_0$ modulo $2^\omega$, de sorte que la valeur de m ne peut être comprise qu'entre 0 et 15 lorsque le radix $\omega$ est égal à 4 bits.

L'étape 116 consiste à élever à la puissance $\alpha$ le résidu $\overline{M}$ au sens de Montgomery, pour l'ensemble des différentes valeurs de $\alpha$ comprises entre 2 et 31. En effet le paramètre r de la méthode m-ary est ici égal à 5 bits, il découle de l'étape 90 du procédé de la figure 6 qu'il n'est pas nécessaire de calculer les puissances $\overline{M}$ supérieures à 31. Cette étape 116 est par exemple réalisée par trente et un produits de Montgomery successifs selon la relation suivante :

$$\overline{M}^\alpha = \text{MonPro}\ (\overline{M}, \overline{M}^{\alpha-1})$$

où MonPro désigne un produit de Montgomery calculé par exemple selon le procédé de la figure 5.

Lors de cette étape, les opérations suivantes sont successivement effectuées :

$\overline{M}^2 := \text{MonPro}\ (\overline{M}, \overline{M})$, où $\overline{M}$ a été calculé lors de l'étape 110 ;
$\overline{M}^3 := \text{MonPro}\ (M, \overline{M}^2)$, où $\overline{M}^2$ a été calculé lors de l'opération précédente ;
etc ...

Ainsi on obtient successivement $\overline{M}^2$ jusqu'à $\overline{M}^{31}$.

L'étape 118 consiste à découper l'exposant E en une succession de mots de 5 bits appelés $F_i$ conformément à l'étape 92 de la méthode m-ary décrite en regard de la figure 6. Ensuite, toujours dans l'étape 118, la valeur de $\overline{M}^{F_{102}}$ est affectée à une variable C selon la relation suivante :

$$\overline{C} := \overline{M}^{F_{102}}$$

Où $F_{102}$ est le 102 énième mot $F_i$ tel que défini en regard de l'étape 94 de la figure 6.

On notera que lors de cette étape, $\overline{M}^{F_{102}}$ n'a pas besoin d'être calculé puisque ce calcul a déjà été effectué lors de l'étape 116.

L'étape 120 consiste à réitérer une boucle d'opérations tant qu'un indice i initialisé à la valeur 101 n'est pas strictement inférieur à 0, l'indice i étant décrémenté de 1 à chaque itération de la boucle d'opérations. La valeur initial de l'indice i est calculée conformément à l'étape 96 de la figure 6 pour un paramètre r de la méthode m-ary égal à 5 bits et une valeur de la variable k égale à 515 bits.

La boucle d'opérations se compose de deux opérations successives 126 et 128.

L'opération 126 consiste à calculer et à stocker l'élévation à la puissance 32 de la variable $\overline{C}$ selon la relation suivante :

$$\overline{C} := \overline{C}^{32}$$

Où:

- $\overline{C}$ est la variable initialisée à l'étape 118 ;
32 est calculé conformément à l'opération 98 de la méthode m-ary de la figure 6, selon la relation $32 = 2^5$, où 5 est la valeur du paramètre r de la méthode m-ary.

L'opération 128 consiste à calculer le produit de Montgomery de la variable $\overline{C}$ par la variable $\overline{M}^{F_i}$ et à stocker ce résultat selon la relation suivante :

$$\overline{C} := \text{MonPro}(\overline{C}, \overline{M}^{F_i})$$

où :

- $\overline{M}_{F_i}$ est sélectionné parmi les puissances de $\overline{M}$ calculées à l'étape 116 connaissant la valeur de $F_i$ ;
- MonPro désigne l'opération produit de Montgomery, par exemple exécutée conformément au procédé de la figure 5.

On notera que cette opération 128 comporte également un test de la valeur de $F_i$ de manière à exécuter le produit de Montgomery que si la valeur de $F_i$ est différente de 0.

En variante le produit de Montgomery est systématiquement exécuté pour éviter le test de la valeur de $F_i$.

A l'issue de l'étape 120, l'étape 122 est exécutée. Cette étape consiste à calculer le produit de Montgomery entre la variable $\overline{C}$ et l'unité 1 et à stocker ce résultat, selon la relation suivante

$$C := \text{MonPro}(\overline{C}, 1)$$

Où:

- $\overline{C}$ est la variable calculée à l'étape 120 ;
1 représente l'unité ;
C est une variable dans laquelle est enregistrée le résultat de l'exponentiation modulaire du message d'entrée M.

On remarque que la combinaison de la méthode m-ary et du procédé de Montgomery pour calculer des multiplications modulaires est particulièrement intéressant dans le cas du calcul d'une exponentiation puisque le résidu de Montgomery du message d'entrée M n'est calculé qu'une seule fois. L'inconvénient du procédé de Montgomery, c'est-à-dire la nécessité de calculer les résidus des variables d'entrée avant d'effectuer des produits de Montgomery est ainsi limité. Cette combinaison de la méthode m-ary et du procédé de Montgomery permet donc d'accélérer le temps d'exécution du calcul d'une exponentiation modulaire.

En variante on peut également combiner le procédé de la figure 7 à la méthode des restes chinois (également appelée méthode CRT). La méthode des restes chinois est succinctement décrite à la figure 8. Cette méthode étant connue, le lecteur se référera pour plus de détail au chapitre 4.1: « Fast Decryption using CRT » du document D1 .

La méthode des restes chinois permet de décomposer une première opération d'exponentiation modulaire en deux secondes opérations d'exponentiation modulaire avec des exposants et des modulus plus petits.

La première exponentiation modulaire est notée comme suit :

$$M^E \bmod n$$

où :

- M est un message d'entrée;
- E est un exposant;
- n est un modulus se décomposant sous la forme d'un produit tel que n=P.Q, où P et Q sont des entiers naturels premiers.

Dans une première étape 130, cette première exponentiation est décomposée en deux secondes exponentiations respectivement modulo E1 et E2 que l'on calcule séparément, selon les relations suivantes :

$$M1 : = M^{E1} \bmod P$$

$$M2 : = M^{E2} \bmod Q$$

où :

- M est le message d'entrée ;

$$E1 = E \bmod (P\text{-}1) \text{ ;}$$

$$E2 = E \bmod (Q\text{-}1) \text{ ;}$$

- M1 et M2 sont des variables de stockage des résultats intermédiaires.

Dans une étape 134 suivante, le résultat de la première exponentiation modulaire est obtenu en combinant les variables M1 et M2 précédemment calculées, selon la relation suivante :

$$M : = M2 + [(M1 - M2) . (Q^{-1} \bmod P) \bmod P] . Q$$

Où:

- M1 et M2 sont les variables calculées à l'étape 130;
- Q et P sont les nombres premiers tels que n = P.Q.

k étant le nombre de bits nécessaires pour coder le modulus n, il est possible de choisir P et Q tel que P et Q aient un nombre de bits sensiblement égal à k/2. Dans ces conditions, on estime que la méthode des restes chinois permet de réduire d'un facteur 4 le nombre d'opérations requises pour calculer la première exponentiation, lorsque celle-ci est mise en œuvre par des moyens logiciels de calcul. Ce facteur est de l'ordre de 2 lorsque la méthode des restes chinois est mise en œuvre par des moyens matériels de calcul tels qu'un composant FPGA. De plus, pour accélérer le temps d'exécution du calcul de la première exponentiation, les calculs des variables M1 et M2 peuvent être effectués en parallèle.

On notera que cette méthode permet ainsi de décomposer une première exponentiation modulaire portant sur des grands nombres codés sur 1024 bits en deux secondes exponentiations modulaires portant sur des grands nombres codés sur 512 bits.

Des estimations de temps de calcul d'une première exponentiation modulaire ont été effectuées dans les conditions suivantes :

- la première exponentiation modulaire portant sur des grands nombres de 1024 bits est décomposée en deux secondes exponentiations modulaires de 512 bits chacune.
- chacune des secondes exponentiations modulaires est calculée selon le procédé de la figure 7 dans lequel les produits de Montgomery sont calculées selon le procédé de la figure 5.

Dans ces conditions lorsque le procédé est mis en œuvre par un composant FPGA travaillant à 40 MHz le temps d'exécution du calcul de la première exponentiation est sensiblement égal à 4.71 milli secondes.

Dans les mêmes conditions mais pour des grands nombres codés sur 1024 bits il a été déterminé que le temps d'exécution du calcul d'une première exponentiation est sensiblement égal à 17.8 milli secondes
La figure 9 représente schématiquement des moyens matériels de calcul 150 conforme à l'invention. Ces moyens matériels sont appelés ici « multiplieur de Montgomery ». Sur cette figure seuls les éléments spécifiques à l'invention ont été représentés. Les autres composants non représentés mais nécessaires à la mise en œuvre du procédé de la figure 5 peuvent être aisément déterminés, de façon classique à partir des éléments décrits précédemment. Ainsi les composants nécessaires pour mettre en œuvre les opérations 78 et 82 de la figure 5 ainsi que les opérations de divisions n'ont pas été représentés. De même les tampons de stockage des variables C1, S1, C2, S2, R et u ne sont pas représentés.

Ce multiplieur 150 comporte une mémoire 152 raccordée à l'entrée et à la sortie de moyens 154 de calculs spécifiques, sous le contrôle de moyens de commande 156.

Le multiplieur de Montgomery 150 décrit ici à titre d'exemple est adapté pour coopérer avec des moyens principaux de calcul (non représentés). Ces moyens principaux de calcul exécutent par exemple une exponentiation modulaire selon le procédé de la figure 7. Dans une telle situation le multiplieur de Montgomery 50 est un coprocesseur permettant d'accélérer le temps d'exécution des produits de Montgomery.

La mémoire 152 est raccordée par l'intermédiaire de bus d'entrée / sortie de données aux moyens principaux de calcul (non représentés).

La mémoire 152 est adaptée pour stocker les variables suivantes :

la variable $\overline{M}$ calculée lors de l'étape 110 du procédé de la figure 7 ;
la variable $n'_0$ calculée lors de l'étape 112 du procédé de la figure 7 ;
les seconds produits m.n calculés lors de l'étape 114 du procédé de la figure 7 ;
les variables $\overline{M}^\alpha$ calculées lors de l'étape 116 de la figure 7 ;
la variable $\overline{C}$ initialisée lors de l'étape 118 et calculée lors des opérations 126 et 128 du procédé de la figure 7 ;
l'unité 1 nécessaire pour la réalisation de l'étape 122 du procédé de la figure 7 ; et
les premiers produits $\overline{ai}.\overline{b}$ pré-calculés lors de l'étape 70 du procédé de la figure 5.

Les moyens 154 de calculs spécifiques comportent un premier et un second additionneurs de Carry-Save 157, 158, un premier et un second additionneurs conventionnels 160 et 162, un registre à décalage à droite 164 et un soustracteur conventionnel 166.

Le premier additionneur de Carry-Save 157 est raccordé à une sortie de la mémoire 152 et à une sortie du second additionneur du Carry-Save 158. Il est également raccordé à l'entrée du second additionneur de Carry-Save 158. Cet additionneur de Carry-Save est ici destiné à réaliser la première opération d'addition 76 du procédé de la figure 5. Sa structure est classique et découle de celle décrite en regard de la figure 3A.

Le second additionneur de Carry-Save 158 est raccordé à la sortie de la mémoire 152 et à une sortie du premier additionneur de Carry-Save 157. Il est également raccordé à une entrée du premier additionneur de Carry-Save 157. Cet additionneur 158 est, ici, destiné à réaliser la seconde opération d'addition 80 du procédé de la figure 5. Sa structure est similaire à celle du premier additionneur de Carry-Save 157.

Le premier additionneur conventionnel 160 est raccordé à une entrée et à la sortie de la mémoire 152. Cet additionneur est destiné à réaliser le pré-calcul des premiers produits $\overline{ai}.\overline{b}$ et des seconds produits m.n. Par exemple le calcul des seconds produits m.n est réalisé selon la succession de calculs suivant :

$$2.N := N+N$$

$$3.N := N+2.N$$

$$4.N := N+3.N$$

etc...

Les résultats des calculs des premiers et des seconds produits sont ensuite stockés dans la mémoire 152 aux emplacements prévus à cet effet.

Le second additionneur conventionnel 162 est raccordé à la sortie du second additionneur de Carry-Save 158 et à une entrée du soustracteur 166. Ce second additionneur 162 est destiné à réaliser l'opération de recombinaison 84 de la figure 5. Sa structure découle de celle décrite en regard de la figure 3B. Toutefois les cellules qui le composent telles que la cellule 48 de la figure 3B, sont regroupées en étages de 32 cellules. La sortie de chaque étage est directement raccordée à un étage correspondant dans le soustracteur 166 de manière à ce que, dès que le calcul de l'addition dans un des étages est fini, le résultat est directement transmis à l'étage correspondant du soustracteur 166 sans attendre. Ainsi le soustracteur 166 exécute l'opération de soustraction avec seulement un cycle d'horloge de retard sur l'opération d'addition. Cette structure est connue sous le nom de « Pipe line », et permet d'accélérer le temps d'exécution des opérations.

Le soustracteur 166 est adapté pour réaliser l'opération 86 de la figure 5. Il est donc par exemple raccordé aux sorties du second additionneur conventionnel 162 et de la mémoire 152. Il est également raccordé à une entrée de la mémoire 152, par exemple, pour stocker le résultat de l'opération de réduction 86.

Le registre à décalage à droite164 est adapté pour décaler à droite de $\omega$ bits, $\omega$ étant le radix de la méthode de Montgomery à radix élevé. Ce registre 164 est destiné à réaliser les opérations calcul des $\overline{a_i}$, le résultat étant alors utilisé pour sélectionner l'un des premiers produits $\overline{a_i} . \overline{b}$ correspondant dans la mémoire 152. Les connexions du registre à décalage 164 avec les autres composants de la figure 9 n'ont pas été représentées pour simplifier la représentation schématique, de telles connexions pouvant aisément être déterminées.

Les moyens de commande 156 sont adaptés pour commander le fonctionnement des moyens de calculs spécifiques 154 et de la mémoire 152 conformément au procédé de la figure 5. Ces moyens de commande sont réalisés de façon classique.

L'ensemble des éléments de la figure 9 sont, par exemple, implantés dans un composant FPGA ou dans un composant ASIC. En variante ce composant est associé à d'autres composants électroniques sur une carte électronique de manière à réaliser une carte électronique conforme au standard PCI. Une carte conforme au standard PCI est enfichable dans des ordinateurs classiques, ces derniers étant alors adaptés pour former les moyens principaux de calcul.

Dans le cas d'un composant FPGA dont la référence est XILINX XCV1600E-6 fonctionnant à 45 MHz, les estimations du nombre de cycles d'horloge requis pour exécuter chaque étape du procédé de la figure 5 sont les suivantes :

  35 cycles d'horloge pour l'étape 70 ;
  260 cycles d'horloge pour l'étape 72 ;
  39 cycles d'horloge pour l'étape 74 de recombinaison et de réduction.

Ainsi l'estimation du nombre de cycles d'horloge total pour calculer un produit de Montgomery selon le procédé de la figure 5 est de 334 cycles d'horloge pour des variables d'entrée codées sur 512 bits.

Dans ces conditions il a également été estimé que le procédé de la figure 7 met en œuvre 643 produits de Montgomery et que l'étape 114 de la figure 7 de pré-calcul des seconds produits m.n nécessite 38 cycles d'horloge. On obtient ainsi une estimation du nombre de cycles d'horloge nécessaires pour calculer une exponentiation modulaire portant sur des grands nombres de 512 bits égale à 214223 cycles d'horloge. Ceci correspond pour une fréquence de fonctionnement du composant FPGA de 45 MHz à un nombre d'exponentiations 512 bits sensiblement supérieur à 200 par seconde. On notera que pour cette estimation on considère que les étapes 110 et 112 du procédé de la figure 7 sont exécutées par les moyens principaux de calcul associés au multiplieur de Montgomery 150. Par conséquent le nombre de cycles d'horloge requis pour exécuter ces deux opérations n'est pas pris en compte dans cette estimation. On admet toutefois que leur temps d'exécution est approximativement 10 fois inférieur à celui des étapes 114 à 122.

En variante les moyens de calculs spécifiques 154 comportent un seul additionneur de Carry-Save. En effet lors de l'exécution du procédé de la figure 5, la première opération d'addition 76 précède toujours la seconde opération d'addition 80 puisque le résultat de la première addition 76 est utilisé dans cette seconde opération d'addition 80. Par conséquent le premier et le second additionneurs de Carry-Save 157, 158 ne sont jamais actifs en même temps, il est donc possible de les remplacer par un seul additionneur de Carry-Save réalisant alternativement la première opération d'addition 76 et la seconde opération d'addition 80.

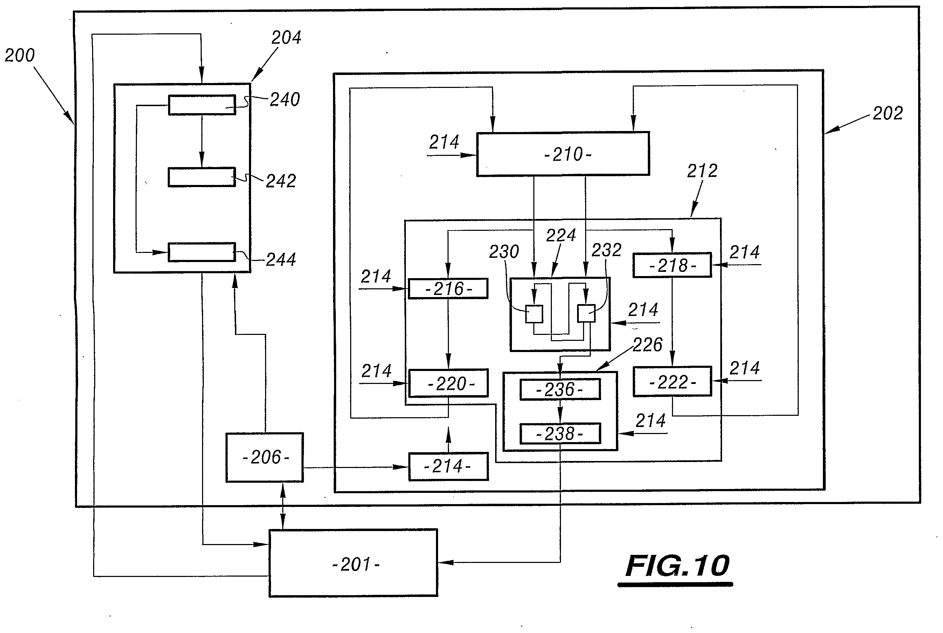

La figure 10 représente schématiquement des moyens matériels de calcul 200 conforme à l'invention associés à des moyens principaux de calcul 201. Sur ce schéma seuls les composants électroniques principaux ont été représentés, les autres composants pouvant être aisément déterminé.

Les moyens principaux de calcul 201 sont adaptés pour réaliser des exponentiations modulaires selon le procédé de la figure 7 en coopérant avec les moyens matériels de calcul 200. Ils sont, par exemple, formés avec un ordinateur. Dans le cas particulier décrit ici, les moyens 201 sont adaptés pour réaliser une première et une seconde exponentiations modulaires. La première et la seconde exponentiations modulaires sont chacune réalisées selon le procédé de la figure 7 et par conséquent mettent en œuvre respectivement des premiers et des seconds produits de Montgomery.

Les moyens matériels de calcul 200 sont adaptés pour former un coprocesseur pour les moyens principaux de calcul 201. Il comporte un multiplieur de Montgomery 202 associé à des moyens de décalage à gauche 204, sous la commande de premiers moyens de commande 206.

Le multiplieur de Montgomery 202 est une variante du multiplieur de Montgomery 150 de la figure 9 dans lequel l'utilisation des ressources est optimisée. En effet il est adapté pour exécuter sensiblement en parallèle les premiers et les seconds produits de Montgomery sans pour autant dédoubler les ressources à mettre en œuvre. Il permet ainsi de diviser par deux le temps d'exécution de deux produits de Montgomery.

Ce multiplieur de Montgomery 202 comporte une mémoire 210 associée à des moyens de calculs spécifiques 212, sous le contrôle de seconds moyens de commande 214. De même que sur la figure 9, seuls les composants principaux ont été représentés, les autres composants sont aisément déterminables.

La mémoire 210 est adaptée pour stocker les variables suivantes :

le résidu $\overline{M}$ d'un message d'entrée M de la première exponentiation, calculé lors de l'étape 110 du procédé de la figure 7 par les moyens de calcul 201.

le résidu $\overline{M}$' d'un message d'entrée M' de la seconde exponentiation, calculé lors de l'étape 110 du procédé de la figure 7 par les moyens de calcul 201.

- les variables $n'_0$ et $n''_0$ calculées lors des étapes 112 du procédé de la figure 7 respectivement pour la première et la seconde exponentiations modulaires ;

les seconds produits m.n et m'.n' calculés lors des étapes 114 du procédé de la figure 7 respectivement pour la première et la seconde exponentiations modulaires ;

les variables $\overline{M}^\alpha$ est $\overline{M}'^\alpha$ calculées lors des étapes 116 du procédé de la figure 7 respectivement pour la première et la seconde exponentiations modulaires ;

les variables $\overline{C}$ et $\overline{C}'$ calculées lors de l'étape 118 et lors des opérations 126 et 128 du procédé de la figure 7 respectivement pour la première et la seconde exponentiations modulaires ;

l'unité 1 nécessaire pour exécuter l'étape 122 du procédé de la figure 7 ;

les modulus n et n' respectivement de la première et de la seconde exponentiations modulaires.

La mémoire 210 comporte un premier et un second tampons d'entrée de données de manière à enregistrer simultanément deux données différentes. Elle comporte également un premier et un second tampons de sortie de données de manière à mettre simultanément à disposition des moyens de calculs spécifiques 212 deux données différentes, une dans chaque tampon de données.

Les moyens 212 de calculs spécifiques comportent un premier et un second registres à décalage à droite 216, 218, un premier et un second additionneurs conventionnels 220, 222, un bloc d'additionneurs de Carry-Save 224 et un bloc 226 de recombinaison et de réduction.

Le premier registre à décalage à droite 216 est raccordé au premier tampon de sortie de données de la mémoire 210 et à l'entrée du premier additionneur conventionnel 220. Ce premier registre à décalage 216 est destiné à être utilisé lors des opérations de calcul de la première exponentiation modulaire. Ainsi ce registre est utilisé de façon similaire au registre 164 de la figure 8 pour calculer les $\overline{a_i}$.

Le second registre à décalage 218 est similaire au premier registre à décalage 216. Toutefois celui-ci est raccordé au second tampon de sortie de données de la mémoire 210 et à l'entrée du second additionneur conventionnel 222. Ce registre à décalage est destiné à être utilisé lors des opérations de calcul de la seconde exponentiation modulaire.

Le premier additionneur conventionnel 220 est raccordé au premier tampon d'entrée de données de la mémoire 210. Cet additionneur conventionnel 220 est destiné à être utilisé pour le calcul de la première exponentiation modulaire. Sa structure et son fonctionnement sont similaires à l'additionneur conventionnel 160 de la figure 8.

Le second additionneur conventionnel 222 est raccordé en sortie du second registre à décalage 118 et au second tampon d'entrée de la mémoire 210. Sa structure et son fonctionnement sont similaires à l'additionneur conventionnel 160 de la figure 8.

Le bloc 224 d'additionneurs de Carry-Save est raccordé au premier et au second tampons de sortie de données de la mémoire 210, et à l'entrée du bloc 226 de recombinaison et de réduction. Ce bloc 224 comporte deux additionneurs de Carry-Save 230 et 232. Le premier et le second additionneurs de Carry-Save 230, 232 sont respectivement adaptés pour réaliser la première opération d'addition 76 et la seconde opération d'addition 80 du procédé de la figure 5. Ces deux additionneurs de Carry-Save 230, 232 sont commandés par les seconds moyens de commande 214 pour que les opérations de calcul du premier et du second produits de Montgomery soient entrelacées. Ainsi après une phase d'initialisation, la première opération d'addition 76 pour le premier produit de Montgomery est exécutée par le premier additionneur de Carry-Save 230 tandis que, dans le même temps, la seconde opération d'addition 80 pour le second produit de Montgomery est exécutée par le second additionneur de Carry-Save 232. Ensuite lors des opérations suivantes d'exécution de la boucle d'opérations 72, la situation s'inverse, c'est-à-dire que l'additionneur de Carry-Save 230 exécute la première opération d'addition 76 pour le calcul du second produit de Montgomery tandis que, dans le même temps, le second additionneur de Carry-Save 232 exécute la seconde opération d'addition 80 pour le calcul du premier produit de Montgomery. Les seconds moyens de commande 214 mettent à profit le fait que dans le procédé de la figure 5 appliqué au calcul d'un seul produit de Montgomery, la première et la seconde opérations d'addition sont toujours successives et ne peuvent pas être réalisées en même temps. Par conséquent lors du calcul d'un seul produit de Montgomery il existe toujours un additionneur de Carry-Save inactif. Ainsi les seconds moyens de commande décrits ici, commandent l'additionneur de Carry-Save inactif pour exécuter une opération d'addition destinée à un second produit de Montgomery exécuté en parallèle avec le premier.

Le bloc 226 de recombinaison et de réduction se compose d'un additionneur conventionnel 236 raccordé à l'entrée d'un soustracteur conventionnel 238. L'additionneur conventionnel 236 est raccordé à la sortie du bloc 224 d'additionneurs de Carry-Save. Cet additionneur conventionnel 236 est adapté pour réaliser l'opération 84 de recombinaison du procédé de la figure 5.

Le soustracteur 238 est raccordé par exemple à l'entrée des moyens principaux de calcul 201 apte à utiliser le résultat du produit de Montgomery. Le soustracteur 238 est adapté pour réaliser l'opération de réduction 86 du procédé de la figure 5.

Les seconds moyens de commande 214 sont réalisés de façon conventionnelle et sont raccordés à l'ensemble des composants du multiplieur de Montgomery 202. Ils sont également adaptés pour commander les différentes opérations de calcul du premier et du second produits de Montgomery réalisées par le multiplieur de Montgomery 202.

Le multiplieur de Montgomery 202 est réalisé, par exemple, à l'aide d'un composant FPGA ou ASIC.

Les moyens 204 de décalage à gauche sont raccordés à l'entrée et à la sortie des moyens principaux de calcul 201 sous la commande des premiers moyens de commande 206.

Les moyens 204 pour effectuer un décalage à gauche comportent une mémoire 240 de type RAM (Random Access Memory) dans laquelle sont stockés un premier et un second exposants correspondant respectivement à ceux de la première et de la seconde exponentiations modulaires. Le premier et le second exposants sont notés respectivement E1 et E2. Cette mémoire 240 est raccordée à l'entrée d'un premier et d'un second registres à décalage à gauche 242, 244 de r bits, r étant le paramètre de la méthode m-ary.

Le registre à décalage à gauche 242 est adapté pour déterminer et fournir les variables $F_i$ issues de l'exposant E1 conformément à l'étape 118 du procédé de la figure 7. Ce registre à décalage comporte un nombre de bits inférieur à celui de l'exposant E1, par exemple 32 bits alors que l'exposant E1 est codé sur 512 bits. Ainsi dès que l'ensemble des bits contenus dans ce registre ont été décalés, le registre est immédiatement rechargé avec les 32 bits suivants de l'exposant E1 extrait de la mémoire 240. Ceci permet d'utiliser un registre à décalage de 32 bits pour décaler des nombres codés sur un nombre de bits supérieurs.

Le registre à décalage à gauche 244 est similaire au registre à décalage 242, toutefois il est destiné à fournir les variables $F'_i$ issues de l'exposant E2.

Les premiers moyens de commande 206 sont raccordés aux moyens 204 de décalage à gauche et aux seconds moyens de commande 214. Ils sont adaptés pour commander les moyens 204 de décalage à gauche et le multiplieur de Montgomery 202 par l'intermédiaire des seconds moyens de commande 214. Ils sont également raccordés aux moyens principaux de calcul 201 et adaptés pour coopérer avec ces derniers pour mettre en œuvre le procédé de la figure 7. Ainsi les étapes 110 et 112 du procédé de la figure 7 sont, par exemple, réalisées par les moyens de calcul 201 tandis que les étapes 114 à 122 mettent en œuvre les moyens matériels de calcul 200 pour accélérer le temps de calcul.

L'ensemble des éléments de la figure 10 sont, par exemple, implantés dans un composant FPGA ou dans un composant ASIC. En variante ce composant est associé à d'autres composants électroniques sur une carte électronique de manière à réaliser une carte électronique conforme au standard PCI. Une carte conforme au standard PCI est enfichable dans des ordinateurs classiques, ces derniers étant alors adaptés pour former les moyens principaux de calcul.

En variante, la première exponentiation modulaire est réalisée sur les poids faibles du message d'entrée tandis ce que la seconde exponentiation modulaire est réalisée sur les poids forts de ce même message, les résultats des exponentiations sur les poids faibles et les poids forts étant ensuite recombiner pour obtenir le résultat final.

Le fonctionnement des composants des moyens matériels de calcul représentés aux figures 9 et 10 est classique en lui-même. Le fonctionnement de la coopération de ces différents composants entre eux découle directement des procédés décrits en regard des figures 5 et 7. Par conséquent la coopération des différents composants entre eux ne sera pas décrite ici plus en détail.

Le fonctionnement du procédé de la figure 7 va maintenant être illustré à l'aide d'un exemple simple consistant à calculer l'exponentiation modulaire suivante :

$$149^{100} \bmod 165$$

où :

- 149 est la valeur du message d'entrée en décimale, noté M dans cet exemple ;
- 100 est la valeur de l'exposant en décimale, noté E dans cet exemple ;
- 165 est la valeur du modulus en décimale, noté n dans cet exemple.

Dans la suite de cet exemple, et pour simplifier la présentation, les produits de Montgomery sont calculés selon le procédé de Montgomery à radix élevé de la figure 2 et non pas suivant le procédé de la figure 5. Le radix est ici choisi égal à 4 bits.

Par ailleurs, le paramètre r de la méthode m-ary est choisi ici égal à 5 bits.

Les représentations binaires de M, n et E sont les suivantes :

$$M = 1001\ 0101\ (\ = 149\ \text{déc.})$$

$$E = 0110\ 0100\ (\ = 100\ \text{déc.})$$

$$N = 1010\ 0101\ (\ = 165\ \text{déc.})$$

On déduit de ces représentations binaires que les variables d'entrée sont codées sur 8 bits et que par conséquent le paramètre p de l'étape 110 de la figure 7 nécessaire pour calculer le résidu de M, noté $\overline{M}$, est égal à $2^8$, c'est-à-dire à 256. L'étape 110 du procédé de la figure 7 consiste donc à réaliser le calcul suivant :

$$\overline{M} = 149 \times 256 \bmod 165.$$

On obtient par une méthode classique, telle que l'algorithme d'Euclide étendu : $\overline{M}$ = 29 déc.

L'étape 112 de la figure 7 consiste à calculer $n'_0$ selon la relation définie à l'étape 2 de la figure 1. Pour cela on détermine d'abord $n_0$, c'est-à-dire les 4 bits de poids faible du modulus n. On a donc $n_0$ égal 5. Ensuite, $n_0^{-1}$ est calculé à l'aide de la relation suivante :

$$n_0.n_0^{-1} = 1 \bmod 16$$

Pour calculer la valeur de la variable $n_0^{-1}$ on exploite le fait que cette valeur est un entier naturel compris entre 0 et 15. Par conséquent pour chaque valeur possible de la variable $n_0^{-1}$ le produit suivant est calculé :

$$n_0.n_0^{-1} \bmod 16$$

Ensuite, on sélectionne la valeur de $n_0^{-1}$ satisfaisant la relation précédemment définie. Par cette méthode on détermine que $n_0^{-1}$ est égal à 13.

On calcule ensuite son complément à 1 et l'on obtient $n'_0$ = 3.

L'étape 114 du procédé de la figure 7 consiste à pré-calculer les 16 valeurs possibles des seconds produits m.n. Etant donné la simplicité de l'exemple décrit ici, ceci sera fait non pas dans cette étape mais directement au moment où la valeur de l'un des seconds produits est requise.

L'étape 116 consiste à calculer $\overline{M}^{\alpha}$ pour les valeurs successives de $\alpha$ comprises entre 2 et 31. Toutefois, dans l'exemple particulier décrit ici, l'exposant E se décompose en seulement deux mots de 5 bits $F_0$ et $F_1$ dont les valeurs sont les suivantes :

$$F_0 = 00100\ (\ = 4\ \text{déc.})$$

23

$$F_1 = 00011\ (= 3\ \text{déc.})$$

Par conséquent seuls les variables $\overline{M}^3$ et $\overline{M}^4$ sont nécessaires pour l'exécution des étapes suivantes. On ne calculera donc ici que ces deux variables $\overline{M}^3$ et $\overline{M}^4$.

Pour calculer $\overline{M}^3$ et $\overline{M}^4$ les opérations suivantes sont successivement effectuées :

$$\overline{M}^2 = \text{MonPro}\ (\overline{M},\ \overline{M})$$

$$\overline{M}^3 = \text{MonPro}\ (\overline{M},\ \overline{M}^2)$$

$$\overline{M}^4 = \text{MonPro}\ (\overline{M},\ \overline{M}^3)$$

Le calcul de ces différents produits de Montgomery est effectué selon le procédé décrit en regard de la figure 2. Le procédé étant identique pour le calcul de $\overline{M}^2$, $\overline{M}^3$ et $\overline{M}^4$, on ne décrit ci-dessous que le calcul de $\overline{M}^2$

A l'étape 16 du procédé de la figure 2 appliqué au calcul de $\overline{M}^2$, les premiers produits $\overline{M}_i . \overline{M}$ sont pré-calculés, où la variable $\overline{M}_i$ prend successivement les deux valeurs suivantes :

$$\overline{M}_0 = 1101\ (= 13\ \text{déc.})$$

$$\overline{M}_1 = 0001\ (= 1\ \text{déc.})$$

Après calcul, on obtient :

$$\overline{M}_0 . \overline{M} = 377\ ;$$

et

$$\overline{M}_1 . \overline{M} = 29.$$

La boucle 18 d'opérations de la figure 2 est ensuite exécutée successivement pour les indices i = 0 et i=1.

Pour i = 0, les opérations 24 à 30 de la boucle 18 sont donc les suivantes :

$$u : = \overline{M}_0 . \overline{M} = 1\ 0111\ 1001\ (= 377\ \text{déc.})$$

$$m : = u_0 . n'_0 \bmod 2^\omega = 93 \bmod 16 = 11$$

$$u : = u + m.n = 377 + 11 \times 165 = 2192$$

$$u : = u / 2^\omega = 2192 / 16 = 137.$$

Pour l'incide i = 1, les opérations 24 à 30 de la boucle 18 sont donc les suivantes :

$$u : = u + \overline{M}_1 . \overline{M} = 137 + 1\ 29 = 166$$

$$m := u_0.n'_0 \bmod 2^\omega = 3 \cdot 6 \bmod 16 = 2$$

$$u := u + m.n = 166 + 2 \cdot 165 = 496$$

$$u := u / 2^\omega = 496 / 16 = 31$$

On obtient donc $\overline{M}^2 = 31$. De façon similaire on détermine $\overline{M}^3 = 164$ ; et $\overline{M}^4 = 16$.

On remarque que $\overline{M}^4$ à l'issue de la boucle d'opérations 18 est égal à 181, ce qui est supérieur au modulus, par conséquent l'étape 20 de réduction doit être exécutée.

Lors de l'opération 118 du procédé de la figure 7, la valeur de la variable $\overline{M}^{Fs-1}$, c'est-à-dire ici $\overline{M}^{F1}$, est affectée à la variable $\overline{C}$.

Les opérations 126 et 128 de la boucle d'opérations 120 du procédé de la figure 7 sont ensuite exécutées pour la valeur de l'indice i = 0.

L'opération 126 consiste à calculer la variable $\overline{C}^{32}$, c'est-à-dire ici à calculer $(\overline{M}^3)^{32}$. Les opérations successives suivantes sont donc exécutées :

$$\overline{M}^8 = \text{MonPro}\,(\overline{M}^4, \overline{M}^4).$$

$$\overline{M}^{16} = \text{MonPro}\,(\overline{M}^8, \overline{M}^8)$$

$$\overline{M}^{32} = \text{MonPro}\,(\overline{M}^{16}, \overline{M}^{16})$$

$$\overline{M}^{64} = \text{MonPro}\,(\overline{M}^{32}, \overline{M}^{32})$$

$$\overline{M}^{96} = \text{MonPro}\,(\overline{M}^{64}, \overline{M}^{32}) = (\overline{M}^3)^{32}$$

Ces produits de Montgomery sont calculés selon le procédé décrit en regard de la figure 2. Les calculs des variables $\overline{M}^{16}$, $\overline{M}^{32}$, $\overline{M}^{64}$, $\overline{M}^{96}$ étant similaires à celui de $\overline{M}^8$, ils ne seront pas décrits ici en détail.

Le calcul de $\overline{M}^8$ est effectué selon la relation suivante :

$$\overline{M}^8 = \text{MonPro}\,(\overline{M}^4, \overline{M}^4) = \text{MonPro}\,(16, 16)$$

Lors de l'étape 16 du procédé de la figure 2, les premiers produits de Montgomery $\overline{a}i.\overline{b}$, c. a. d. ici $\overline{M}_0^4 \overline{M}^4$ et $\overline{M}_1^4.\overline{M}^4$ sont pré-calculés. Les valeurs de $\overline{M}_0^4$ et $\overline{M}_1^4$ sont les suivantes :

$$\overline{M}_0^4 = 0000\ (= 0 \text{ déc.})$$

$$\overline{M}_1^4 = 0001\ (= 1 \text{ déc.})$$

On en déduit donc les valeurs des premiers produits suivantes :

$$\overline{M}_0^4 . \overline{M}^4 = 0 \times 16 = 0$$

$$\overline{M}_1^4 . \overline{M}^4 = 1 \times 16 = 16$$

La boucle d'opérations 18 de la figure 2 est ensuite exécutée successivement pour i = 0 et i=1.

Pour i = 0, les opérations 24 à 30 de la boucle 18 sont donc les suivantes :

$$u := u + \overline{ai} \cdot \overline{b} = 0$$

$$m := u_0 \cdot n'_0 \bmod 2^{\omega} = 0 \times 3 \bmod 16 = 0$$

$$u := u + m.n = 0 + 0 \times 165 = 0$$

$$u := u / 2^{\omega} = 0 / 16 = 0$$

Pour i = 1, les opérations 24 à 30 de la boucle 18 sont donc les suivantes :

$$u := u + \overline{ai} \cdot \overline{b} = 0 + 16 = 16$$

$$m := u_0 \cdot n'_0 \bmod 2^{\omega} = 0 \times 3 \bmod 16 = 0$$

$$u := u + m.n = 16 + 0 \times 165 = 16$$

$$u := u / 2^{\omega} = 16 / 16 = 1$$

De façon similaire on obtient les résultats numériques suivants :

$$\overline{M}^{16} = 136 \ ;$$

$$\overline{M}^{32} = 31 \ ;$$

$$\overline{M}^{64} = 16 \ ;$$

$$\overline{M}^{96} = 136.$$

Lors de l'exécution de l'opération 128 du procédé de la figure 7, $F_0$ étant différent de 0, le produit de Montgomery entre la variable $\overline{C}^{32}$ et $\overline{M}^{F0}$ est calculé selon la relation suivante :

$$\overline{C} := \text{MonPro} (\overline{M}^{96}, \overline{M}^{4})$$

où :

$$\overline{M}^{96} = 136 \ ;$$

$$\overline{M}^{4} = 16.$$

A l'issue du calcul de ce produit de Montgomery selon le procédé de la figure 2 on obtient le résultat suivant :

$$\overline{C} : = \text{MonPro } (136, 16) = 91$$

La boucle d'opérations 120 du procédé de la figure 7 n'est exécutée qu'une seule fois puisque la valeur initiale de l'indice i est 0.

A l'issue de l'exécution de la boucle d'opération 120, l'étape 122 est exécutée. Elle consiste à effectuer l'opération suivante :

$$C : = \text{MonPro } (\overline{C}, 1)$$

où :

$$\overline{C} = 91 ;$$

- 1 est l'unité.

A l'issue du calcul de ce produit de Montgomery selon le procédé de la figure 2 on obtient le résultat numérique suivant :

$$C : = \text{MonPro } (91,1) = 1$$

Ainsi le résultat final de l'exponentiation modulaire $149^{100}$ mod 165 est égal à 1.

On conçoit donc à la lecture de la description qui précède que l'invention permet d'accélérer le temps d'exécution du calcul d'un produit de Montgomery sur des moyens matériels de calcul. La description précédente décrit également l'application de l'invention à des procédés de cacul de multiplications et d'exponentiations modulaires, les procédés de calcul des multiplications et des exponentiations modulaires décrits étant eux-mêmes optimisés pour accélérer encore plus leur temps d'exécution. Les multiplications modulaires ou les exponentiations modulaires sont, comme on l'a déjà indiqué, utilisées dans de nombreux procédés et systèmes de cryptage/décryptage d'informations. Toutefois, les applications de l'invention ne se limitent pas à ce domaine d'application mais s'étendent à tous les domaines techniques où des produits de Montgomery, des multiplication modulaires ou des exponentiations modulaires sont utilisés, tels que par exemple le domaine des télécommunications ou autres.

**Revendications**

1. Dispositif de cryptage/décryptage d'informations comportant des moyens matériels de calcul d'un produit de Montgomery à partir de la méthode de Montgomery à radix élevé pour réaliser le cryptage/décryptage sur la base de ce produit de Montgomery, lesdits moyens matériels de calcul (150 ; 200) étant adaptés pour réitérer une boucle d'opérations comportant :

   - des moyens pour réaliser une première opération d'addition arithmétique (24, 76) d'une valeur d'un de plusieurs premiers produits, notés $\overline{a_i}.\overline{b}$ et d'une valeur d'une variable, notée u ;
   - des moyens pour réaliser une deuxième opération d'addition arithmétique (28 ; 80) d'une valeur d'un de plusieurs seconds produits, notés m.n, et d'une valeur de ladite variable u,
   - des moyens pour réaliser une troisième opération de division de la variable u par une puissance de 2, notée

   $2^\omega$ où $\omega$ est le radix, selon une troisième relation $u := \dfrac{u}{2^\omega},$

   les moyens matériels de calcul (150 ; 200) comportant :

   - un additionneur de Carry-Save adapté pour recevoir en entrée la variable u sous la forme d'un couple de Carry-Save et ladite valeur d'un de plusieurs produits, notés $\overline{a_i}.\overline{b}$, respectivement m.n, et à délivrer en sortie le résultat de la première, respectivement la deuxième, opération d'addition arithmétique sous la forme d'un couple de Carry-Save, et
- des moyens pour affecter à la variable u la valeur obtenue en sortie dudit au moins un additionneur de Carry-Save, et

le dispositif comportant des moyens de stockage de la variable u sous la forme d'un couple de Carry-Save formé par deux variables, notées C et S et des moyens pour réaliser la troisième opération de division de la variable u sous la forme d'un couple de Carry-Save comprenant :

• des moyens de calcul et de stockage d'une retenue, notée $R_e$, qui risque d'être perdue par la division de chaque variable C et S par la puissance de 2;
• des moyens de division de chaque variable C et S par la puissance de 2 ;

les moyens pour effectuer la première et la deuxième opérations d'addition comportant au moins un premier additionneur de Carry-Save (157 ; 230) adapté pour réaliser la première opération d'addition et un deuxième additionneur de Carry-Save (158 ; 232) adapté pour réaliser la deuxième opération d'addition ;
les moyens de calcul et de stockage de la retenue $R_e$ comportant des moyens d'addition conventionnelle des ω bits de poids faible de la variable C, notés $C_0$, aux ω bits de poids faible de la variable S, notés $S_0$, selon une quatrième relation $R_e := C_0 + S_0$ ;
le dispositif comprenant :

- des moyens (162 ; 236) de recombinaison de la variable u au moins à partir des valeurs des variables C et S du couple de Carry-Save,
- des moyens (166 ; 238) de réduction de la variable u, lesdits moyens de recombinaison de la variable u et lesdits moyens de réduction étant raccordés l'un à l'autre de manière à chevaucher leur fonctionnement sous le contrôle de moyens de commande (156 ; 214) ;

le radix ω étant égal à 4 bits pour optimiser le temps d'exécution du calcul d'un produit Montgomery sur des variables d'entrée du produit de Montgomery codées sur 512 ou 1024 bits ;
le dispositif comportant des moyens (164, 160 ; 216, 214, 218, 222) de pré-calculs des premiers produits $\overline{a_i}.\overline{b}.$ et/ou des seconds produits m.n.

2. Dispositif selon la revendication 1, dans lequel lesdits moyens de pré-calculs des premiers et/ou des seconds produits comportent un additionneur conventionnel (160 ; 220, 222).

3. Dispositif selon la revendication 1 ou 2 pour calculer un premier et un second produits de Montgomery, comportant deux additionneurs de Carry-Save (230, 232) activables simultanément pour réaliser en même temps la première opération d'addition pour le premier produit et la deuxième opération d'addition pour le second produit.

4. Dispositif selon la revendication 3, comportant un seul moyen (162) pour recombiner la variable u à partir au moins des valeurs de variables C et S du couple de Carry-Save, relié en entrée d'un seul moyen (166) de réduction de la variable u.

5. Dispositif selon l'une quelconque des revendications 1 à 4, dont les moyens matériels sont conçus pour le calcul d'une multiplication modulaire mettant en œuvre plusieurs produits de Montgomery.

6. Dispositif selon la revendication 5, dont les moyens matériels sont conçus pour le calcul d'une exponentiation modulaire mettant en œuvre plusieurs multiplications modulaires.

7. Dispositif selon la revendication 6, conçu pour calculer l'exponentiation modulaire par la méthode m-ary avec une taille de mots de r bits.

8. Dispositif selon la revendication 7, comportant au moins un registre (242, 244) à décalage à gauche de 5 bits pour accélérer l'exécution de la méthode m-ary avec r égal à 5 bits.

9. Dispositif selon la revendication 6, conçu pour calculer l'exponentiation modulaire par la méthode des restes chinois.

**10.** Dispositif selon l'une quelconque des revendications 1 à 9, conçu sous la forme d'un élément d'une carte électronique.conforme au standard PCI.

**11.** Procédé de cryptage/décryptage d'informations comportant le calcul d'un produit de Montgomery à partir de la méthode de Montgomery à radix élevé pour réaliser le cryptage/décryptage sur la base de ce produit de Montgomery, ledit procédé étant mis en œuvre sur un dispositif conforme à l'une quelconque des revendications 1 à 10, ladite méthode comprenant une boucle d'opérations, par réitération d'opérations successives réalisées par lesdits moyens matériels de calcul (150 ; 200) comportant :

- une première opération d'addition arithmétique (24, 76) d'une valeur d'un de plusieurs premiers produits, notés $\overline{a_i}.\overline{b}$ et d'une valeur d'une variable, notée u ;

- une deuxième opération d'addition arithmétique (28 ; 80) d'une valeur d'un de plusieurs seconds produits, notés m.n, et d'une valeur de ladite variable u,

- une troisième opération de division (30 ; 76) de la variable u par une puissance de 2, notée $2^\omega$ où $\omega$ est le radix, selon une troisième relation $$u := \frac{u}{2^\omega},$$

le procédé consistant :

a) à délivrer, en entrée dudit au moins un additionneur de Carry- Save, la valeur de la variable u sous la forme d'un couple de Carry-Save et ladite valeur d'un de plusieurs produits, notés $\overline{a_i}.\overline{b}$, respectivement m.n, pour exécuter lesdites première et deuxième opérations d'addition arithmétique et pour obtenir en sortie le résultat de la première, respectivement de la deuxième, opérations d'addition arithmétique sous la forme d'un couple de Carry-Save,
b) à affecter, à la valeur de la variable u, le résultat obtenu en sortie dudit au moins un additionneur de Carry-Save, et
c) à répéter les opérations de délivrance et d'affectation pour chacune desdites itérations,

la variable u étant enregistrée sous la forme d'un couple de Carry-Save formé par deux variables, notées C et S, pour l'exécution des opérations de la boucle (72), et
la troisième opération de division de la variable u sous la forme d'un couple de Carry-Save étant réalisée en deux étapes, à savoir :

• une étape préliminaire (82) de calcul et de stockage d'une retenue, notée $R_e$, qui risque d'être perdue par la division de chaque variable C et S par la puissance de 2;
• une étape de division (76) de chaque variable C et S par la puissance de 2;

l'étape préliminaire (82) de calcul de la retenue $R_e$ comprenant l'opération d'additionner de façon classique $\omega$ bits de poids faible de la variable C, notés $C_0$, à $\omega$ bits de poids faible de la variable S, notés $S_0$, selon une quatrième relation $R_e := C_0 + S_0$;
une recombinaison (78, 84) de u à partir des variables C et S du couple de Carry- Save et de la retenue $R_e$ comprenant l'opération de décaler à droite de $\omega$ bits la retenue $R_e$ et d'additionner de façon conventionnelle le résultat obtenu aux variables C et S selon une cinquième relation $u := C+S+R_e/2^\omega$ ;
le procédé comportant à l'issue de l'exécution de la boucle d'opérations (72) :

- une étape de recombinaison (84) de la variable u à partir au moins des valeurs des variables C et S du couple de Carry-Save calculées pendant l'exécution de la boucle d'opérations, et
- une étape de réduction (86) de la variable u selon une sixième relation $u := u-n$, où n est un modulus,

lesdites étapes de recombinaison et de réduction de la variable u se chevauchant de manière à accélérer leur temps d'exécution ;
le radix $\omega$ étant égal à 4 bits pour optimiser le temps d'exécution du calcul d'un produit Montgomery sur des variables d'entrée du produit de Montgomery codées sur 512 ou 1024 bits ; et
les premiers produits $\overline{a_i}.\overline{b}$ et/ou les seconds produits m.n étant pré-calculés avant d'exécuter la boucle d'opérations (72).

**12.** Procédé selon la revendication 11 pour traiter le calcul d'un premier et d'un second produits de Montgomery en appliquant pour chaque produit les étapes a) à c), comportant au moins une première étape pendant laquelle la première opération d'addition (76) pour le premier produit est réalisée en même temps que la seconde opération d'addition (80) pour le second produit.

**13.** Procédé selon la revendication 12, comportant au moins une seconde étape décalée dans le temps par rapport à la première, pendant laquelle la seconde opération d'addition (80) pour le premier produit est réalisée en même temps que la première opération d'addition (76) pour le second produit.

**14.** Procédé selon la revendication 12 ou 13, comportant à l'issue de l'exécution de la boucle d'opérations (72) :

une étape de recombinaison (84) puis de réduction (86) pour le premier produit exécuté en premier ; et ensuite, une étape de recombinaison (84) puis de réduction (86) pour le second produit exécuté en second.

**15.** Procédé selon l'une des revendications 12 à 14, dans lequel une des variables d'entrée du premier produit de Montgomery exécuté en premier se compose des poids faibles d'une variable, et une des variables d'entrée du second produit de Montgomery exécuté en second se compose des poids forts de cette même variable.

**16.** Procédé selon l'une quelconque des revendications 11 à 15, comportant le calcul d'une multiplication modulaire mettant en œuvre plusieurs produits de Montgomery.

**17.** Procédé selon la revendication 16, comportant le calcul d'une exponentiation modulaire mettant en œuvre plusieurs multiplications modulaires.

**18.** Procédé selon la revendication 17, dans lequel l'exponentiation modulaire est calculée par la méthode m- ary avec une taille de mots de r bits.

**19.** Procédé selon la revendication 18, dans lequel la taille de mots r de la méthode m-ary est égale à 5 bits pour accélérer le temps d'exécution de la méthode m-ary lorsque des variables d'entrée du calcul de l'exponentiation modulaire sont codées sur 512 ou 1024 bits.

**20.** Procédé selon la revendication 18 ou 19, dans lequel les seconds produits m.n sont pré-calculés avant d'appliquer la méthode m- ary.

**21.** Procédé selon la revendication 17, dans lequel l'exponentiation modulaire est calculée par la méthode des restes chinois.

**22.** Procédé selon l'une quelconque des revendications 11 à 21, appliqué à des nombres codés sur plus de 320 bits.

**23.** Programme d'ordinateur téléchargeable depuis un réseau de communication et/ou enregistré sur un support lisible par ordinateur et/ou exécutable par un processeur, **caractérisé en ce qu'**il comprend des instructions pour l'exécution des étapes d'un procédé de cryptage/décryptage d'informations que lorsqu'il est exécuté par un système de traitement de données, exécute chacune des étapes du procédé des revendications 11 à 22.

**Patentansprüche**

**1.** Vorrichtung zum Verschlüsseln/Entschlüsseln von Informationen, umfassend Hardware-Mittel zum Berechnen eines Montgomery-Produkts auf Grundlage des Montgomery-Verfahrens mit großer Grundzahl, um das Verschlüsseln/Entschlüsseln auf der Basis dieses Montgomery-Produkts auszuführen, wobei die Hardware-Rechenmittel (150; 200) dafür geeignet sind, eine Schleife von Operationen zu wiederholen, umfassend:

- Mittel, um eine erste Operation des arithmetischen Addierens (24, 76) eines Wertes eines von mehreren ersten Produkten, die mit $\overline{a}$, $\overline{b}$ bezeichnet werden, und eines Wertes einer Variablen, die mit u bezeichnet wird, auszuführen;
- Mittel, um eine zweite Operation des arithmetischen Addierens (28; 80) eines Wertes eines von mehreren zweiten Produkten, die mit m.n bezeichnet werden, und eines Wertes der Variablen u auszuführen,

- Mittel, um eine dritte Operation des Dividierens der Variablen u durch eine Potenz von 2, die mit $2^\omega$ bezeichnet wird, wobei $\omega$ die Grundzahl ist, gemäß einer dritten Beziehung $u := \frac{u}{2^\omega}$ auszuführen,

wobei die Hardware-Rechenmittel (150; 200) umfassen:

- einen Carry-Save-Addierer, der dafür geeignet ist, am Eingang die Variable u in der Form eines Carry-Save-Paares und den Wert eines von mehreren Produkten, die mit $\overline{a_t}.\overline{b}$ beziehungsweise m.n bezeichnet werden, zu empfangen, und am Ausgang das Ergebnis der ersten beziehungsweise der zweiten arithmetischen Additionsoperation in der Form eines Carry-Save-Paares zu liefern, und
- Mittel, um der Variablen u den am Ausgang des mindestens einen Carry-Save-Addierers erhaltenen Wert zuzuordnen, und

wobei die Vorrichtung Mittel zum Speichern der Variable u in der Form eines Carry-Save-Paares, das von zwei Variablen gebildet wird, die mit C und S bezeichnet werden, und Mittel umfasst, um die dritte Operation des Dividierens der Variablen u in der Form eines Carry-Save-Paares auszuführen, umfassend:

-- Mittel zum Berechnen und zum Speichern einer mit $R_e$ bezeichneten Übertragsziffer, die durch das Dividieren jeder Variablen C und S durch die Potenz von 2 verlorenzugehen droht;
-- Mittel zum Dividieren jeder Variablen C und S durch die Potenz von 2;

wobei die Mittel, um die erste und die zweite Additionsoperation vorzunehmen, mindestens einen ersten Carry-Save-Addierer (157; 230), der dafür geeignet ist, die erste Additionsoperation auszuführen, und einen zweiten Carry-Save-Addierer (158; 232) umfassen, der dafür geeignet ist, die zweite Additionsoperation auszuführen;
wobei die Mittel zum Berechnen und zum Speichern der Übertragsziffer $R_e$ Mittel zum herkömmlichen Addieren der $\omega$ niedrigstwertigen Bits der Variable C, die mit $C_0$ bezeichnet werden, zu den $\omega$ niedrigstwertigen Bits der Variable S, die mit $S_0$ bezeichnet werden, gemäß einer vierten Beziehung $R_e := C_0 + S_0$ umfassen;
wobei die Vorrichtung umfasst:

- Mittel (162; 236) zum Rekombinieren der Variablen u mindestens auf Grundlage der Werte der Variablen C und S des Carry-Save-Paares,
- Mittel (166; 238) zum Reduzieren der Variablen u, wobei die Mittel zum Rekombinieren der Variablen u und die Mittel zum Reduzieren unter der Steuerung von Steuermitteln (156; 214) so miteinander verbunden werden, dass sich ihr Betrieb überlappt;

wobei die Grundzahl $\omega$ gleich 4 Bits ist, um die Ausführungszeit der Berechnung eines Montgomery-Produkts auf Eingangsvariablen des Montgomery-Produkts, die auf 512 oder 1024 Bits codiert sind, zu optimieren;
wobei die Vorrichtung Mittel (164, 160; 216, 214, 218, 222) zum Vorberechnen der ersten Produkte $\overline{a_t}.\overline{b}$ und/oder der zweiten Produkte m.n umfasst.

2. Vorrichtung nach Anspruch 1, wobei die Mittel zum Vorberechnen der ersten und/oder der zweiten Produkte einen herkömmlichen Addierer (160; 220, 222) umfassen.

3. Vorrichtung nach Anspruch 1 oder 2, um ein erstes und ein zweites Montgomery-Produkt zu berechnen, umfassend zwei Carry-Save-Addierer (230, 232), die gleichzeitig aktiviert werden können, um die erste Additionsoperation für das erste Produkt und die zweite Additionsoperation für das zweite Produkt gleichzeitig auszuführen.

4. Vorrichtung nach Anspruch 3, die ein einziges Mittel (162) umfasst, um die Variable u auf Grundlage mindestens der Werte von Variable C und S des Carry-Save-Paares zu rekombinieren, das mit dem Eingang eines einzigen Mittels (166) zum Reduzieren der Variablen u verbunden ist.

5. Vorrichtung nach einem der Ansprüche 1 bis 4, wobei die Hardware-Mittel für die Berechnung einer modularen Multiplikation konzipiert sind, die mehrere Montgomery-Produkte einsetzt.

6. Vorrichtung nach Anspruch 5, wobei die Hardware-Mittel für die Berechnung einer modularen Exponentiation konzipiert sind, die mehrere modulare Multiplikationen einsetzt.

**7.** Vorrichtung nach Anspruch 6, die dafür konzipiert ist, die modulare Exponentiation über das m-ary-Verfahren mit einer Wortgröße von r Bits zu berechnen.

**8.** Vorrichtung nach Anspruch 7, die mindestens ein 5-Bit-Linksschieberegister (242, 244) umfasst, um das Ausführen des m-ary-Verfahrens mit r gleich 5 Bits zu beschleunigen.

**9.** Vorrichtung nach Anspruch 6, die dafür konzipiert ist, die modulare Exponentiation über das Verfahren der chinesischen Reste zu berechnen.

**10.** Vorrichtung nach einem der Ansprüche 1 bis 9, die in der Form eines Elements einer elektronischen Karte nach dem PCI-Standard konzipiert ist.

**11.** Verfahren zum Verschlüsseln/Entschlüsseln von Informationen, das das Berechnen eines Montgomery-Produkts auf Grundlage des Montgomery-Verfahrens mit großer Grundzahl umfasst, um das Verschlüsseln/Entschlüsseln auf der Basis dieses Montgomery-Produkts auszuführen, wobei das Verfahren auf einer Vorrichtung nach einem der Ansprüche 1 bis 10 eingesetzt wird, wobei das Verfahren eine Operationsschleife durch Wiederholen von aufeinanderfolgenden Operationen umfasst, die von den Hardware-Rechenmitteln (150; 200) ausgeführt werden, umfassend:

- eine erste Operation des arithmetischen Addierens (24, 76) eines Wertes eines von mehreren ersten Produkten, die mit $\overline{a}_i.\overline{b}$ bezeichnet werden, und eines Wertes einer Variablen, die mit u bezeichnet wird;
- eine zweite Operation des arithmetischen Addierens (28; 80) eines Wertes eines von mehreren zweiten Produkten, die mit m.n bezeichnet werden, und eines Wertes der Variablen u,
- eine dritte Operation des Dividierens (30; 76) der Variablen u durch eine Potenz von 2, die mit $2^\omega$ bezeichnet wird, wobei $\omega$ die Grundzahl ist, gemäß einer dritten Beziehung $u := \dfrac{u}{2^\omega}$,

wobei das Verfahren darin besteht:

a) am Eingang des mindestens einen Carry-Save-Addierers den Wert der Variablen u in der Form eines Carry-Save-Paares und den Wert eines von mehreren Produkten, die mit $\overline{a}_i.\overline{b}$ beziehungsweise m.n bezeichnet werden, zu liefern, um die erste und zweite arithmetische Additionsoperation auszuführen und um am Ausgang das Ergebnis der ersten beziehungsweise der zweiten arithmetischen Additionsoperation in der Form eines Carry-Save-Paares zu erhalten,
b) dem Wert der Variablen u das am Ausgang des mindestens einen Carry-Save-Addierers erhaltene Ergebnis zuzuordnen, und
c) die Operationen des Lieferns und des Zuordnens für jede der Iterationen zu wiederholen,

wobei die Variable u für das Ausführen der Operationen der Schleife (72) in der Form eines Carry-Save-Paares gespeichert wird, das von zwei Variablen gebildet wird, die mit C und S bezeichnet werden, und wobei die dritte Operation des Dividierens der Variablen u in der Form eines Carry-Save-Paares in zwei Schritten ausgeführt wird, nämlich:

-- einem vorbereitenden Schritt (82) des Berechnens und Speicherns einer mit $R_e$ bezeichneten Übertragsziffer, die durch das Dividieren jeder Variablen C und S durch die Potenz von 2 verlorenzugehen droht;
-- einem Schritt des Dividierens (76) jeder Variablen C und S durch die Potenz von 2;

wobei der vorbereitende Schritt (82) des Berechnens der Übertragsziffer $R_e$ die Operation des Addierens, in klassischer Art und Weise, von $\omega$ niedrigstwertigen Bits der Variable C, die mit $C_0$ bezeichnet werden, zu $\omega$ niedrigstwertigen Bits der Variable S, die mit $S_0$ bezeichnet werden, gemäß einer vierten Beziehung $R_e := C_0 + S_0$ umfasst; wobei ein Rekombinieren (78, 84) von u auf Grundlage der Variablen C und S des Carry-Save-Paares und der Übertragsziffer $R_e$ die Operation des Rechtsschiebens der Übertragsziffer $R_e$ um $\omega$ Bits, und des Addierens, in herkömmlicher Art und Weise, des erhaltenen Ergebnisses zu den Variablen C und S gemäß einer fünften Beziehung $u := C + S + R_e/2^\omega$ umfasst; wobei das Verfahren am Ende der Ausführung der Operationsschleife (72) umfasst:

- einen Schritt des Rekombinierens (84) der Variablen u auf Grundlage mindestens der Werte der Variablen C und S des Carry-Save-Paares, die während der Ausführung der Operationsschleife berechnet wurden, und
- einen Schritt des Reduzierens (86) der Variablen u gemäß einer sechsten Beziehung u: = u-n, wobei n ein Modulus ist,

wobei sich die Schritte des Rekombinierens und des Reduzierens der Variablen u so überlappen, dass ihre Ausführungszeit beschleunigt wird;
wobei die Grundzahl $\omega$ gleich 4 Bits ist, um die Ausführungszeit der Berechnung eines Montgomery-Produkts auf Eingangsvariablen des Montgomery-Produkts, die auf 512 oder 1024 Bits codiert sind, zu optimieren; und
wobei die ersten Produkte $\overline{a_i}.\overline{b}$ und/oder der zweiten Produkte m.n vor dem Ausführen der Operationsschleife (72) vorberechnet werden.

12. Verfahren nach Anspruch 11, um die Berechnung eines ersten und eines zweiten Montgomery-Produkts unter Anwendung, für jedes Produkt, der Schritte a) bis c) zu verarbeiten, umfassend mindestens einen ersten Schritt, während dem die erste Additionsoperation (76) für das erste Produkt gleichzeitig mit der zweiten Additionsoperation (80) für das zweite Produkt ausgeführt wird.

13. Verfahren nach Anspruch 12, das mindestens einen zweiten, in Bezug auf den ersten zeitlich verschobenen Schritt umfasst, während dem die zweite Additionsoperation (80) für das erste Produkt gleichzeitig mit der ersten Additionsoperation (76) für das zweite Produkt ausgeführt wird.

14. Verfahren nach Anspruch 12 oder 13, das am Ende der Ausführung der Operationsschleife (72) umfasst:

einen Schritt des Rekombinierens (84), und danach des Reduzierens (86) für das erste Produkt, das als erstes ausgeführt wird; und anschließend
einen Schritt des Rekombinierens (84), und danach des Reduzierens (86) für das zweite Produkt, das als zweites ausgeführt wird.

15. Verfahren nach einem der Ansprüche 12 bis 14, wobei eine der Eingangsvariablen des ersten Montgomery-Produkts, das als erstes ausgeführt wird, aus den Niedrigstwertigen einer Variable besteht, und eine der Eingangsvariablen des zweiten Montgomery-Produkts, das als zweites ausgeführt wird, aus den Höchstwertigen derselben Variable besteht.

16. Verfahren nach einem der Ansprüche 11 bis 15, das die Berechnung einer modularen Multiplikation umfasst, welche mehrere Montgomery-Produkte einsetzt.

17. Verfahren nach Anspruch 16, das die Berechnung einer modularen Exponentiation umfasst, die mehrere modulare Multiplikationen einsetzt.

18. Verfahren nach Anspruch 17, wobei die modulare Exponentiation über das m-ary-Verfahren mit einer Wortgröße von r Bits berechnet wird.

19. Verfahren nach Anspruch 18, wobei die Wortgröße r des m-ary-Verfahrens gleich 5 Bits beträgt, um die Ausführungszeit des m-ary-Verfahrens zu beschleunigen, wenn Eingangsvariablen der Berechnung der modularen Exponentiation auf 512 oder 1024 Bits codiert sind.

20. Verfahren nach Anspruch 18 oder 19, wobei die zweiten Produkte m.n vor dem Anwenden des m-ary-Verfahrens vorberechnet werden.

21. Verfahren nach Anspruch 17, wobei die modulare Exponentiation über das Verfahren der chinesischen Reste berechnet wird.

22. Verfahren nach einem der Ansprüche 11 bis 21, das auf Zahlen angewendet wird, die auf mehr als 320 Bits codiert sind.

23. Computerprogramm, das aus einem Kommunikationsnetz heruntergeladen werden kann und/oder auf einem computerlesbaren Träger gespeichert ist und/oder von einem Prozessor ausgeführt werden kann, **dadurch gekennzeichnet, dass** es Anweisungen für das Ausführen der Schritte eines Verfahrens zum Verschlüsseln/Entschlüsseln von Informationen umfasst, das, wenn es von einem Datenverarbeitungssystem ausgeführt wird, jeden der Schritte des Verfahrens der Ansprüche 11 bis 22 ausführt.

**Claims**

1. Device for encrypting/decrypting information comprising hardware processing means for computation of a Montgomery product on the basis of the high-radix Montgomery method in order to perform the encryption/decryption based on this Montgomery product, wherein said hardware processing means (150; 200) are adapted to reiterate a loop of operations comprising:

   - means for performing a first operation of arithmetic addition (24, 76) of a value of one of several first products, denoted $\overline{a}_i.\overline{b}$ and a value of a variable, denoted u;
   - means for performing a second operation of arithmetic addition (28; 80) of a value of one of several second products, denoted m.n, and a value of said variable u,

   - means for performing a third operation of division of the variable u by a power of 2, denoted $2^\omega$ where $\omega$ is the radix, according to a third relationship $u := \dfrac{u}{2^\omega},$

   wherein the hardware processing means (150; 200) include:

   - a Carry-Save adder adapted to receive at the input the variable u in the form of a Carry-Save ordered pair and said value of one of several products, denoted $\overline{a}_i.\overline{b}$, respectively m.n, and to provide at the output the result of the first, respectively the second, arithmetic addition operation in the form of a Carry- Save ordered pair, and
   - means for allocating to the variable u the value obtained at the output of said at least one Carry-Save adder, and

   wherein the device comprises means for storing the variable u in the form of a Carry-Save ordered pair formed by two variables, denoted C and S and means for performing the third operation of division of the variable u in the form of a Carry-Save ordered pair comprising:

   • means for calculating and storing a carry digit, denoted $R_e$, which is at risk of being lost by the division of each variable C and S by the power of 2;
   • means for dividing each variable C and S by the power of 2;

   wherein the means for performing the first and second operations of addition comprise at least a first Carry-Save adder (157; 230) adapted to perform the first addition operation and a second Carry-Save adder (158; 232) adapted to perform the second addition operation;
   wherein the means for calculating and storing the carry digit $R_e$ comprise means for conventionally adding the $\omega$ least significant bits of the variable C, denoted $C_0$, to the $\omega$ least significant bits of the variable S, denoted $S_0$, according to a fourth relationship $R_e := C_0+S_0$;
   wherein the device comprises:

   - means (162: 236) for recombining the variable u at least on the basis of values of variables C and S of the Carry-Save ordered pair,
   - means (166; 238) for reducing the variable u, wherein said means for recombining the variable u and said means for reducing are connected together so as to overlap their operation under control of control means (156; 214);

   wherein the radix $\omega$ is equal to 4 bits in order to optimize the time required for performing the calculation of a Montgomery product on input variables of the Montgomery product encoded on 512 or 1024 bits;
   wherein the device comprises means (164, 160; 216, 214, 218, 222) for pre-calculating the first products $\overline{a}_i.\overline{b}$ and/or the second products m.n.

2. Device according to claim 1, wherein said means for pre-calculating the first and/or second products comprise a conventional adder (160; 220, 222).

3. Device according to claim 1 or 2 for calculating a first and a second Montgomery products, comprising two Carry-Save adders (230, 232) that can be activated simultaneously in order to perform at the same time the first addition operation for the first product and the second addition operation for the second product.

4. Device according to claim 3, comprising a single means (162) for recombining the variable u from at least the values of variables C and S of the Carry-Save ordered pair, connected to the input of a single means (166) for reducing the variable u.

5. Device according to any of claims 1 to 4, the hardware means of which are designed for calculating a modular multiplication that implements several Montgomery products.

6. Device according to claim 5, the hardware means of which are designed for calculating a modular exponentiation that implements several modular multiplications.

7. Device according to claim 6, designed for calculating the modular exponentiation using the m-ary method with a word size of r bits.

8. Device according to claim 7, comprising at least one register (242, 244) for shifting 5 bits to the left in order to speed up the execution of the m-ary method with r equal to 5 bits.

9. Device according to claim 6, designed for calculating the modular exponentiation using the Chinese remainders method.

10. Device according to any of claims 1 to 9, designed in the form of an element of an electronic card compliant with the PCI standard.

11. Method for encrypting/decrypting information comprising a computation of a Montgomery product on the basis of the high-radix Montgomery method in order to perform the encryption/decryption based on this Montgomery product, wherein said method is implemented on a device according to any of claims 1 to 10, said method comprising a loop of operations, by reiterating successive operations performed by said hardware processing means (150; 200) comprising:

- a first operation of arithmetic addition (24, 76) of a value of one of several first products, denoted $\overline{a}_i.\overline{b}$ and a value of a variable, denoted u;
- a second operation of arithmetic addition (28; 80) of a value of one of several second products, denoted m.n, and a value of the said variable u,
- a third operation of division (30; 76) of the variable u by a power of 2, denoted $2^\omega$ where $\omega$ is the radix, according to a third relationship $u := \dfrac{u}{2^\omega}$,

wherein the method consists of:

a) providing, at the input of said at least one Carry-Save adder, the value of variable u in the form of a Carry-Save ordered pair and said value of one of several products, denoted $\overline{a}_i.\overline{b}$, respectively m.n, to execute said first and second arithmetic addition operations and to provide at the output the result of the first, respectively the second, arithmetic addition operation in the form of a Carry- Save ordered pair,
b) allocating, to the value of variable u, the result obtained at the output of said at least one Carry-Save adder, and
c) repeating providing and allocating operations for each of said iterations,

wherein the variable u is stored in the form of a Carry-Save ordered pair formed by two variables, denoted C and S, for executing the operations of the loop (72), and
wherein the third operation of division of the variable u in the form of a carry-save ordered pair is performed in two steps, namely:

• a preliminary step (82) for calculating and storing a carry digit, denoted $R_e$, which is at risk of being lost by the division of each variable C and S by the power of 2;
• a step for dividing (76) each variable C and S by the power of 2;

wherein the preliminary step (82) for calculating the carry digit $R_e$ comprises the operation of conventionally adding $\omega$ least significant bits of the variable C, denoted $C_0$, to $\omega$ least significant bits of the variable S, denoted $S_0$, according to a fourth relationship $R_e := C_0 + S_0$;

wherein a recombination (78, 84) of u on the basis of the variables C and S of the Carry-Save ordered pair and of the carry digit $R_e$ comprises the operation of shifting to the right by $\omega$ bits the carry digit $R_e$ and in a conventional manner adding the result obtained to the variables C and S according to a fifth relationship $u := C+S+R_e/2^{\omega}$;

wherein the method comprises after execution of the operation loop (72):

- a step for recombining (84) the variable u at least on the basis of the values of variables C and S of the Carry-Save ordered pair calculated during the execution of the operation loop, and
- a step for reducing (86) the variable u according to a sixth relationship $u := u-n$, where n is a modulus,

wherein said steps for recombining and reducing the variable u overlap so as to speed up their execution time;

wherein the radix $\omega$ is equal to 4 bits in order to optimize the time required for performing the calculation of a Montgomery product on input variables of the Montgomery product encoded on 512 or 1024 bits; and

wherein the first products $\bar{a}_i.\bar{b}$ and/or the second products m.n are pre-calculated before executing the operation loop (72).

12. Method according to claim 11 to perform the calculation of a first and a second Montgomery products by applying for each product steps a) to c), comprising at least a first step during which the first addition operation (76) for the first product is carried out at the same time as the second addition operation (80) for the second product.

13. Method according to claim 12, comprising at least a second step shifted in time with respect to the first, during which the second addition operation (80) for the first product is carried out at the same time as the first addition operation (76) for the second product.

14. Method according to claim 12 or 13, comprising at the end of performing the loop of operations (72):

a step of recombination (84) then of reduction (86) for the first product performed first; and then,
a step of recombination (84) then of reduction (86) for the second product performed second.

15. Method according to one of claims 12 to 14, wherein one of the input variables of the first Montgomery product performed first is made up of the least significant bits of a variable, and one of the input variables of the second Montgomery product performed second is made up of the most significant bits of this same variable.

16. Method according to any one of claims 11 to 15, comprising the calculation of a modular multiplication that implements several Montgomery products.

17. Method according to claim 16, comprising the calculation of a modular exponentiation that implements several modular multiplications.

18. Method according to claim 17, wherein the modular exponentiation is calculated using the m-ary method with a word size of r bits.

19. Method according claim 18, wherein the word size r of the m-ary method is equal to 5 bits in order to speed up the time for performing the m-ary method when input variables of the modular exponentiation calculation are encoded on 512 or 1024 bits.

20. Method according claim 18 or 19, wherein the second products m.n are pre-calculated before applying the m-ary method.

21. Method according to claim 17, wherein the modular exponentiation is calculated using the Chinese remainders method.

22. Method according any one of claims 11 to 21, applied to numbers encoded on more than 320 bits.

23. Computer programme that can be downloaded from a communication network and/or recorded on a computer readable support and/or executed by a processor, **characterized in that** it comprises instructions for performing the steps of an information encryption/decryption method which, when it is executed by a data processing system, executes each step of the method of claims 11 to 22.

EP 1 368 747 B1

$$n_0' = -n_0^{-1}$$ — 2

$$\bar{a} := a.p \bmod n$$ — 4

$$\bar{b} := b.p \bmod n$$ — 6

$$\bar{x} := MonPro(\bar{a}, \bar{b})$$ — 8

$$x := MonPro(\bar{x}, 1)$$ — 10

**FIG.1**

$$u := 0; i := 0$$ — 16

18

for i=0 to s-1

$$u := u + \bar{a}_i.\bar{b}$$ — 24

$$m := u_0.n_0' \bmod 2^w$$ — 26

$$u := u + m.n$$ — 28

$$u := u/2^w$$ — 30

$$If\ u \geq n\ then\ u := u - n$$ — 20

**FIG.2**

$A_2\ B_2\ D_2$ 　 $A_1\ B_1\ D_1$ 　 $A_0\ B_0\ D_0$

44 　 42 　 40

$C_3\ S_2$ 　 $C_2\ S_1$ 　 $C_1\ S_0$

**FIG.3A**

$A_2\ B_2$ 　 $A_1\ B_1$ 　 $A_0\ B_0$

52 　 50 　 48

$S_3$ 　 $S_2$ 　 $S_1$ 　 $S_0$

**FIG.3B**

$$C = 0110\ \ 0000\ \ 0010$$
$$S = 01001001\ \ 1110$$
$$C + S = \quad 1010\ \ 1010\ \ 0000 = 680$$
$$(C + S)/16 = 1010\ \ 1010\ \ = 170$$
$$C/16 = 0110\ \ 0000$$
$$S/16 = 0100\ \ 1001$$
$$C/16 + S/16 = 1010\ \ 1001 = 169$$

**FIG.4**

72

70 — $c1 := 0;\ S1 := 0;\ C2 := 0;\ S2 := 0;\ R := 0$

for $i = 0$ to $s-1$

76 — $(C1, S1) := C2/2^W + S2/2^W + \bar{a}_i . b$

78 — $m := [(C1_0 + S1_0 + (R/2^W)_0] . n'_0$

80 — $(C2, S2) := C1 + S1 + m . n$

82 — $R := C2_0 + S2_0 + R$

74

84 — $u := C2/2^W + S2/2^W + R/2^W$

86 — If $u \geq n$ then $u := u - n$

**FIG.5**

$M^{\alpha} \bmod n$ for all $\alpha=2,3,4,\ldots,m-1$ —90

$F_i$; $i=0,1,2,\ldots,s'-1.$ —92

$C:=M^{F_{s'-1}} \bmod n$ —94

96

for $i=s'-2$ downto $0$

$C:=C^{2^r} \bmod n$ —98

If $F_i \neq 0$ then $C:=C.M^{F_i} \bmod n$ —100

**_FIG.6_**

$\overline{M}:=M.p \bmod n$ —110

$n'_0 = -\bar{n}_0^{1}$ —112

$m.n; m=0,1,2,3\ldots15$ —114

$\overline{M}^{\alpha}:=MonPro(\overline{M},\overline{M}^{\alpha-1}); \alpha=2,3\ldots31$ —116

120

$F_i; i=0,1,\ldots\ldots,102$
$\overline{C}:=\overline{M}^{F_{102}}$ —118

**_FIG.7_**

for $i=101$ downto $0$

$\overline{C}:=\overline{C}^{32}$ —126

If $F_i \neq 0$ then $\overline{C}:=MonPro(\overline{C}^{32}\overline{M})$ —128

$C:=MonPro(\overline{C},1)$ —122

$$M1:=M^{E1} \bmod P$$
$$M2:=M^{E2} \bmod Q$$

~130

***FIG.8***

$$M:=M2+[(M1-M2).(Q^{-1} \bmod P) \bmod P].Q$$ ~134

150

154

156

I/O

-152-

156 → -157-          -158- ← 156

-156-

156 → -164-          -162- ← 156

-166- ← 156

-160- ← 156

***FIG.9***

41

FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CA 940651031

- US 6185596 B1

**Littérature non-brevet citée dans la description**

- Multi-operand modulo addition using Carry Save adders. **KOC C K et al.** ELECTRONICS LETTERS. IEE STEVENAGE, 15 Mars 1990, vol. 26

- Montgomery réduction with even modulus. **KOC C K.** IEE PROCEEDINGS : COMPUTERS AND DIGITAL TECHNIQUES. IEE, vol. 141, 314-316